# EUROPEAN PATENT APPLICATION

(11) **EP 2 613 253 A1**
(43) Date of publication of application: **10.07.2013**
(21) Application number: 12199458.6
(22) Date of filing: 27.12.2012
(51) Int. Cl.: G06F 9/44

(54) **Display control program and apparatus**

(30) Priority: 04.01.2012 JP 2012000200
(71) Applicant: Fujitsu Limited, Kawasaki-shi, Kanagawa 211-8588 (JP); Denso Corporation, Kariya-shi, Aichi 448-8661 (JP)
(72) Inventor: Shikasho, Akira, Kanagawa, 211-8588 (JP); Hirabayashi, Shunichi, Kanagawa, 211-8588 (JP); Ohta, Yoshiyuki, Kanagawa, 211-8588 (JP); Suzuki, Ryoji, Aichi, 448-8661 (JP)
(74) Representative: HOFFMANN EITLE

(57) **Abstract**

A computer (200) is caused to execute a process including obtaining screen information representing a screen, element attribute information associated with the screen information and representing an attribute of an element included in the screen, operation condition information regarding a condition for the element included in the screen to operate, and operation detail information regarding a detail of a process of the element to operate (S2) ; outputting the screen information associated with the element attribute information as information representing a screen of screen transition information representing a transition relationship between the screens created from the operation condition and the operation detail information (S5); and in setting a simulation execution condition, making a display unit display the element attribute information associated with the screen information corresponding to the screen of a simulation execution target in a selectable manner (S3).

## Description

### FIELD

The embodiments discussed herein Are related to A display control program and a display control apparatus to control screen display.

### BACKGROUND

User interface (hereinafter, referred to as UI) is one of interfaces for exchanging information between a computer and a user. On the operation screen using the UI, for example, when a menu displayed on the screen is selected via a mouse, keyboard and the like, the display screen is shifted and various applications are executed. Meanwhile, when developing operation screens using the UI, the layout of the operation screen and the operations of the UI parts are set by the developer.

The development of the UI described above is performed in order of the "us specification creation process" in which the developer determines the operations of the UI and describes the specification, the "development process" to create the source code, and the "test process" to make the UI actually perform the actions using the created source code to test the operability.

Specifically, in the UI specification process, the developer describes the processing details on the screen freely with a natural language, to create the specification of the UI. Then, in the development process, the developer views the processing details described in the specification process and creates the source code by manually performing coding to describe the source code using a programming language. After that, in the test process, the created source code is converted into the object code, and the operability of the UI is tested by making the UI actually perform the actions.

Patent document 1: Japanese Laid-open Patent Publication

### SUMMARY

According to an aspect of the embodiments, a technique to separate, in the screen transition specification, the screen transition according to the original change of the screen from option information, to output the screen transition specification according to the original change of the screen, and also to secure the branch operation according the option is provided.

A display control program according to an aspect of the present embodiment causes a computer to execute the following process. The computer obtains screen information representing a screen, element attribute information associated with the screen information and representing an attribute of an element included in the screen, operation condition information regarding a condition for the element included in the screen to operate, and operation detail information regarding a detail of a process of the element to operate. The computer outputs the screen information associated with the element attribute information as information representing a screen of screen transition information representing a transition relationship between the screens created from the operation condition and the operation detail information. The computer makes a display unit display the element attribute information associated with the screen information corresponding to the screen of a simulation execution target in a selectable manner, in setting a simulation execution condition.

### BRIEF DESCRIPTION OF DRAWINGS

FIG. 1A-FIG. 1B are diagrams for explaining the screen specification and the screen transition specification of the user interface (UI).
FIG. 2 presents a block diagram of an output control apparatus in the present embodiment.
FIG. 3 presents a configuration block diagram of a UI design support apparatus in the present embodiment.
FIG. 4 is a diagram for illustrating the process of the UI design support apparatus in the present embodiment.
FIG. 5 presents the data structure of attribute information included in parts information in the present embodiment.
FIG. 6 is a diagram for explaining an example of the setting of the screen specification in the present embodiment.
FIG. 7A-FIG. 7G present an example of lists regarding the types of the options and values that the options may take in the present embodiment.
FIG. 8 presents a setting example of the option about parts P1, P2 arranged on the screen
FIG. 9A-FIG. 9C are diagrams for explaining an example of selectable combinations of the options in the present embodiment.
FIG. 10 presents an option selection list for respective screens in the present embodiment.
FIG. 11 is a diagram for explaining the setting of options based on the dependency between options in the present embodiment.
FIG. 12 is a diagram for explaining the change of options between screen A1 and A1' that share the base screen but has different parts options, in the simulation in the present embodiment.
FIG. 13 is a block diagram presenting the configuration of the UI design support apparatus according to an example of the present embodiment.
FIG. 14 is a diagram presenting a display example of a screen edit view according to an example of the present embodiment.
FIG. 15 is a diagram presenting a display example of parts display setting view according to an example of the present embodiment.
FIG. 16 is a diagram presenting a display example of an operation definition format select view according to an example of the present embodiment.
FIG. 17 is a diagram presenting a display example of a parts attribute select view according to an example of the present embodiment.
FIG. 18 presents an example of an operation definition format according to an example of the present embodiment.
FIG. 19 is a diagram presenting an example of specification data in a tree structure according to an example of the present embodiment.
FIG. 20 is a diagram presenting an example of specification data in a tree structure according to an example of the present embodiment.
FIG. 21 is a diagram presenting an example of a simulation operation screen according to an example of the present embodiment.
FIG. 22 is a diagram explaining a simulation execution process according to an example of the present embodiment.
FIG. 23 is a diagram presenting an example of the configuration of the source code according to an example of the present embodiment.
FIG. 24A-FIG. 24C presents an example of the specification of the UI application according to an example of the present embodiment.
FIG. 25 presents the overall process flow of the UI design support apparatus according to an example of the present embodiment.
FIG. 26 is a flow presenting an example of details of the process in S14.
FIG. 27 is a flow presenting an example of details of the process in S18.
FIG. 28 is a flow presenting an example of details of the process in S19.
FIG. 29 is a configuration block diagram of the hardware environment of a computer according to an example of the present embodiment.

### DESCRIPTION OF EMBODIMENTS

In the UI specification creation process, screen specification to arrange UI parts indicating areas to display buttons, characters, graphs or drawings on the screen, and transition specification (screen transition specification) to describe the way the screen changes with the pressing of a button for example are created.

The screen specification · transition specification assumes display of processing results of the UI functions on one display. As the screen specification, screen corresponding to various UI manipulations have been designed. As the screen transition specification, execution of what UI manipulation causes transition to what screen has been designed.

However, there have been more requests to effectively develop variations for respective delivery destinations and purposes of the products, such as display of character representation in the screen in a plurality of languages and higher levels of display contents depending on the product grades.

In order to respond to such requests, functions and equipment (options) that become available depending on the delivery destinations and purposes of the product, the product grade, the operation environment and the like are provided, which are not provided as standard functions and equipment (standard specification).

When creating the screen specification and the screen transition specification that are compatible with various options as described above, the UI is to be provided with adjustments to the screen in the standard specif ication according the options.

However, since not only the screens for the standard specification but also screens corresponding to the options are to be prepared and a large number of similar screens are made ready, details of the screen transition specification in the actual application product become complicated. For that reason, when considering the screen transition specification in the UI specificationcreationprocess, ithasbeendifficulttovisually check and understand the contents of the screen transition specification instantly.

Then, in an aspect herein, a technique to separate, in the screen transition specification, the screen transition according to the original change of the screen from option information, to the screen transition specification according to the original change of the screen, and to secure the branch operation by the option is provided.

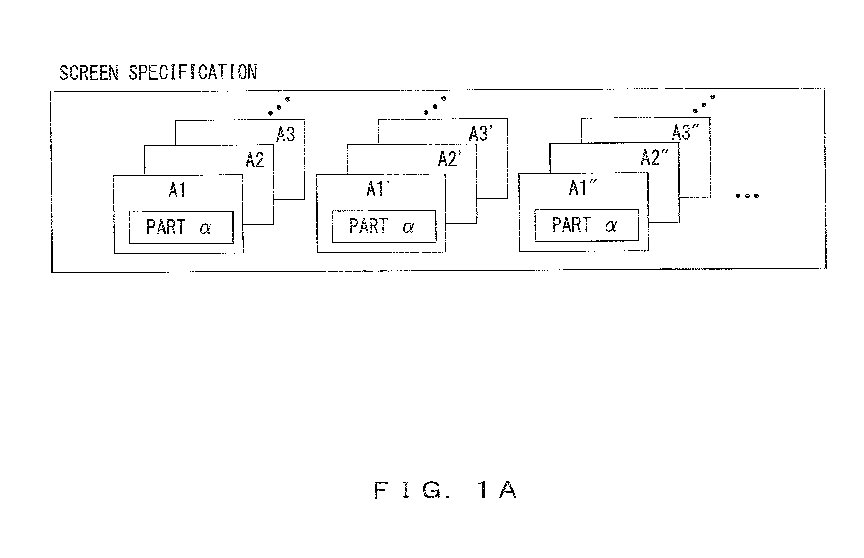

FIG. 1A-FIG. 1B are diagrams for explaining the screen specification and the screen transition specification of the user interface (UI). FIG. 1A is a diagram for explaining the screen specification. In the screen specification creation process, for example, using a screen designing tool and the like, the operator creates a screen A1 that becomes the standard specification and screens (A1' , A1", ...) in which options are added to the screen A1 in units of screen transition.

Here, as the categories of options, for example, there are types according to the difference in the display wording level, the difference in character type, the difference in the drawing level, the difference inparts, the difference in the input system, the difference in the product delivery destination, the difference in the presence/absence of display, the difference in the presence/absence of screen display and the like. The difference in the display wording level represents the difference in the language or the difference in the semantic content. The difference in the character type represents the difference in the font, or the difference in the icon, and the like. The difference in the drawing level represents the difference in the drawing algorithm such as the two-dimensional (2D) /three-dimensional (3D) drawing and the like. The difference in parts represents the difference whether to given an instruction using a button or to use a slider to obtain the same information, and the like. The difference in the input system represents the difference whether the input is from parts arranged in the screen or the input is from a switch provided outside the screen, or the input is voice input, and the like. The difference in the product delivery destination represents the difference in the country, area, company, user for the delivery. The difference in the presence/absence of display represents the difference whether or not to display parts themselves arranged on the screen according to options and execution conditions and the like. The difference in the presence/absence of screen display represents the difference whether or not to display the screen itself according to options and execution conditions and the like.

In addition, the operator also creates, using the screen specification setting screen (not illustrated in the drawing), operation definition information such as what process is to be executed and transition to what screen is to be performed when an event occurs in the UI parts, and the like.

Here, using screen designing tool, regarding the UI parts, attribute information such as the color, size, display method and the like may be set. Each attribute may further be selected from a plurality of options. Therefore, when it is desired to give some variation to the display contents depending on the product grade of the product on which the developed UI is implemented, the display contents of the screen may be adjusted.

For example, for a UI that is implemented on a low-grade product, the option for the display method of button parts is set as "two-dimensional display". Accordingly, screens A1, A2, A3, ... may be designed so as to display buttons flat. In addition, for example, for a UI that is implemented on a high-grade product, the option for the display method of button parts is set as "three-dimensional display". Accordingly, screens A1', A2', A3', ... may be designed so as to display buttons three dimensionally.

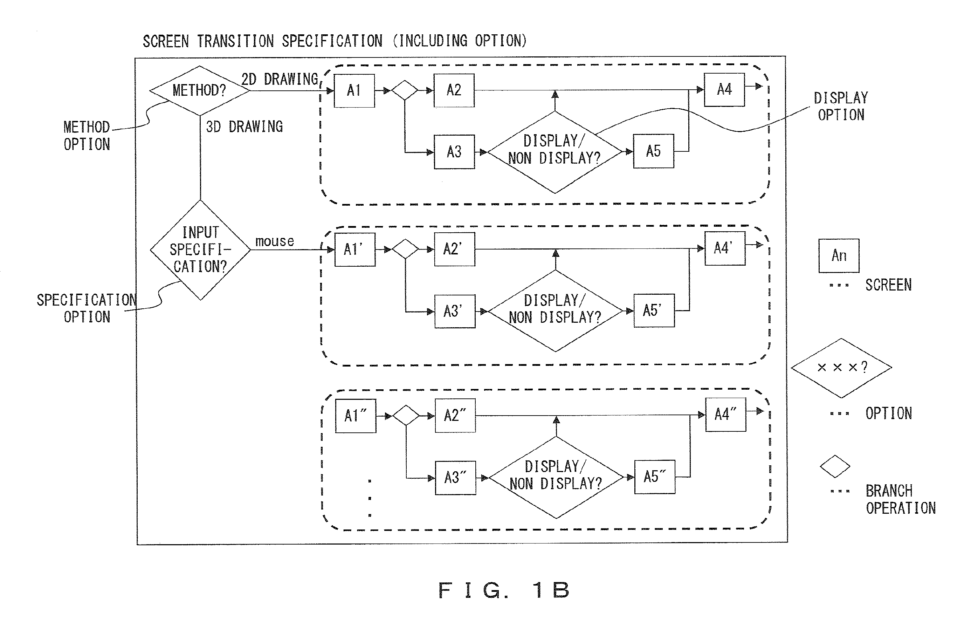

FIG. 1B is a diagram for explaining screen transition specification. In FIG. 1B, since the display method of some UI parts and the like differs depending on options, an example of describing the screen transition according to the change depending on the options is presented. For example, the screen transition branches depending on whether the button drawing method is "2D drawing" or "3D drawing" (display method option), whether the input specification is mouse input or not (input specification option) and the like.

Meanwhile, except the difference in options of the attributes of the UI parts such as the display method option and the input specification and the like, the transition of the algorithm of the UI application (hereinafter, referred to as "UI App") of screens A1-A5 and screens A1"-A5" is assumed to be the same.

The basic flow of the screen transition of the screens A1-A5, screens A1'-A5', screens A1"-A5" are the same. However, depending on the display mode of the parts displayed on the screen, the screens A1-A5, screens A1'-A5', screens A1"-A5" have been respectively described on the screen transition specification.

As described above, while the specification of the underlying screen transition, the displayed wordings and display modes differ depending on the branch operation according to the difference in the attribute of parts information and the screen being the transition target. For that reason, in screen transition specification, the flow of the screen transition has been described according to the attribute of parts information and the branch operation. As a result, the flow of the original screen change of the UI app being the development target has been difficult to understand on the screen transition specification.

Therefore, in this embodiment, a technique to separate, in the screen transition specification, the screen change of the UI app from the branch operation according the option, and to output the screen transition specification in which the original screen change of the UI app has been made easy to understand and also to secure the specification of the branch operation by the option is provided.

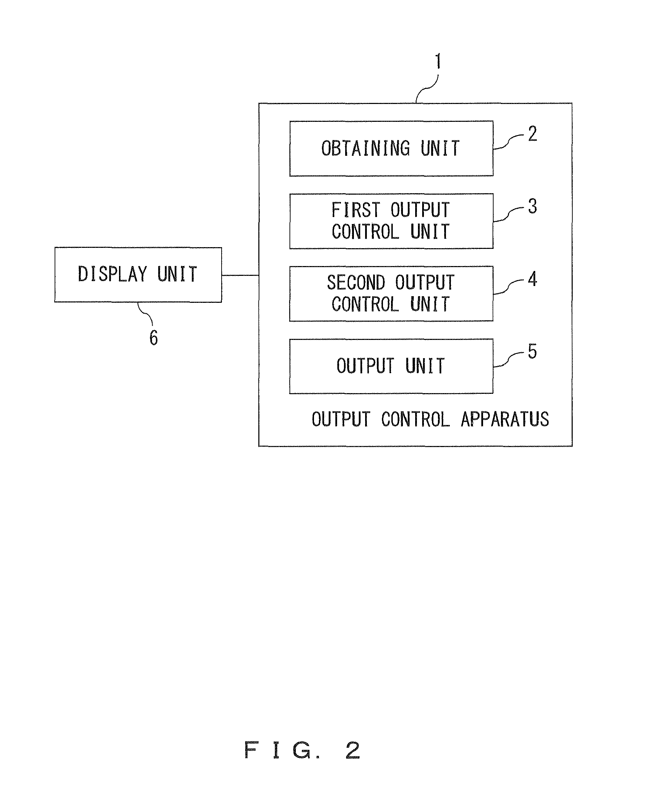

FIG. 2 presents a block diagram of an output control apparatus according to the present embodiment. An output control apparatus 1 includes an obtaining unit 2, a first output control unit 3, and a second output control unit 4.

The obtaining unit 2 obtains screen information representing the screen, element attribute information associated with the screen information and representing the attribute of an element included in the screen, operation condition information regarding the conditions for the element included in the screen to operate, and operation detail information regarding the detail of the process of the element to operate. AN example of the obtaining unit 2 is a screen design unit 12.

The first output control unit 3 output screen information associated with the element attribute information as information representing a screen of screen transition information representing the transition relationship between screens created from the operation condition information and the operation detail information. An example of the first output control unit 3 is a UI specification creation unit 15.

The second output control unit 4 makes a display unit 6 display the element attribute information associated with the screen information corresponding to the simulation execution target screen in a selectable manner, in the setting of the simulation execution condition. An example of the second output control unit 4 is a condition setting display unit 13.

By the configuration described above, it becomes possible, in the screen transition specification, to separate the screen transition according to the original change of the screen from option information, and to output the screen transition specification according to the original change of the screen and also to secure the specification of the branch operation by the option.

The output control apparatus further includes an output unit 5. The output unit 5 outputs screen transition information, element information associated with screen information, element attribute information of the element or a source code. An example of the output unit 5 is an output control unit 18.

By the configuration described above, by specifying an option, the following may be performed after checking the algorithm of the UI app for the respective product delivery destinations and product grades by performing an operation simulation. That is, the output control apparatus 1 may create specifications or the source code of the UI app that reflect detailed changes corresponding to respective options such as delivery destinations, grades etc.

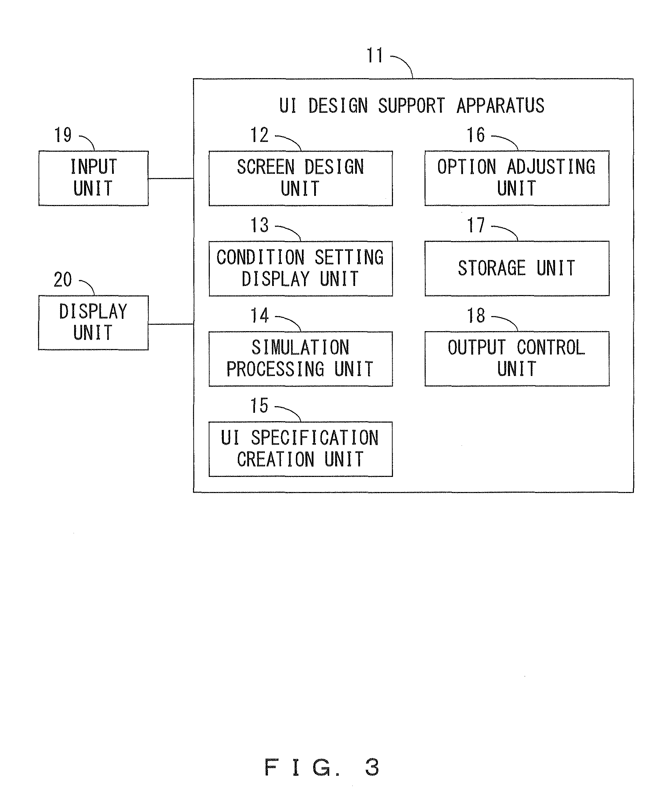

FIG. 3 presents a configuration block diagram of an UI design support apparatus in the present embodiment. A UI design support apparatus 11 includes a screen design unit 12, a condition setting display unit 13, a simulation processing unit 14, a UI specification creation unit 15, an option adjusting unit 16, a storage unit 17, an output control unit 18.

With the screen design unit 12, according to the requirement specification of the UI app, the operator designs the screen to present the functions of the UI app by selecting parts to be arranged on the screen, setting attribute, function and the like for the parts, and locating the parts on the development target screen. The operator sets, to the screen design unit 12, each screen that presents the functions of the UI app to the user, using an input unit 19,

When setting an attribute of a screen or a part using the screen design unit 12 and an option from a plurality of options is set to the attribute, the option adjusting unit 16 limits options that can be set to other attributes, according to the selected option.

The storage unit 17 includes parts information in which the attribute of the part set in the screen design unit 12 and information regarding the option set to the attribute. Furthermore, the storage unit 17 includes operation definition data and specification data. The operation definition data is information that defines operation condition (processing condition) and operation detail (processing detail) of the element displayed on the screen set in the screen design unit 12.

When setting the simulation execution condition, the condition setting display unit 13 makes a display unit 20 display the options of the attributes of the parts stored in the stored in the storage unit 17 in a selectable manner.

The simulation processing unit 14 executes the simulation (virtual execution) of the functions of the screen and parts based on the operation definition data, parts information and simulation execution condition and the like. The simulation processing unit 14 changes the option of the attribute of parts based on the simulation execution condition selected in the condition setting display unit 13.

The UI specification creation unit 15 creates information that represents a screen in screen transition information representing the transition relationship between screen information associated with the option of the parts and a screen created from the operation condition information and operation detail information.

The output control unit 18 data regarding the source code, the screen transition specification of the UI app using the parts information, operation definition data, specification information and the like stored in the storage unit 17, and outputs it to the display unit 20.

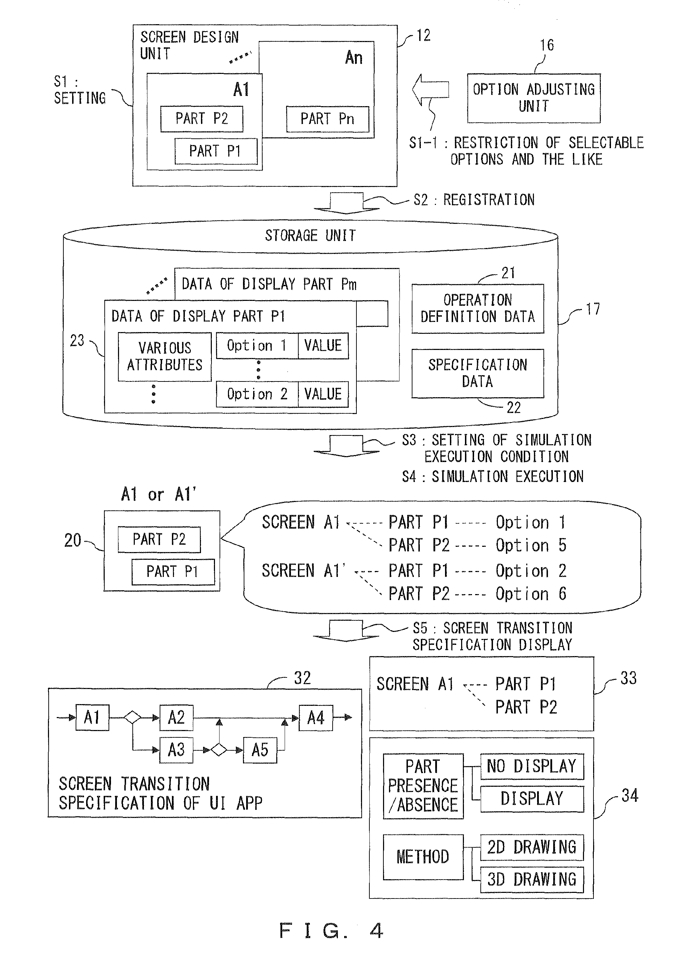

FIG. 4 is a diagram for explaining the process of the UI design apparatus in the present embodiment. The screen design unit 12 makes the display unit 20 a screen for work (design screen) for designing the screen. The operator designs, according the screen specification, using the input unit 19, the screen and the parts to be arranged on the screen (S1). The operator selects, parts using the input unit 19 on the design screen, and sets the attribute and operation of the parts, the process to be executed along with an occurring event, and the like. For example, it is assumed that the operator arranges parts P1, P2 on the screen A1.

When the operator sets the attribute of parts and sets an option from a plurality of option to the attribute, the options that may be set for other attributes are restricted by the option adjusting unit 16 according to the selected option. For that reason, the operator is to select and set a selectable option based on the restriction by the option adjustment 16, in setting the attribute of the parts (S1-1).

That is, the option adjusting unit 16 may check the dependency between options and then set the option. For example, when there are options related to the grade, it is assumed that the options in the selectable range change according to the grade. For example, when a low-grade option is set for a part to be arranged on the UI screen, the option adjusting unit 16 may make it impossible for the operator to set the option of the 3D drawing method. Thus, the option adjusting unit 16 has a function to check the dependency between options or an option that is unnecessary to set, and the like.

The screen design unit 12 registered the information set on the design screen in the storage unit 17 as operation definition data 21, specification data 22, parts information 23 (S2). The operation definition data 21 is information that defines the operation condition (processing condition) and operation detail (processing detail) of the parts displayed on the screen set in the screen design unit 12. The specification data 22 is information that describes the launch event, conditional operation and processing operation according to the operation definition data. The parts information 23 is information for simulation execution, information for specification expression, information for source code creation.

Before executing the simulation, the operator sets the condition of the simulation on the design screen, according to the test specification and using the input unit 19 (S3). At this time, the condition setting display unit 13 makes the display unit 20 display the options of the attribute of the parts stored in the storage unit 17 in a selectable manner. The operator sets, for example, an option 1 for the part P1, and sets an option 5 for the part P2. Meanwhile, for example the operator sets an option 2 for the part P1, and sets an option 6 for the part P2.

The simulation processing unit 14 executes a simulation of functions of the screen and parts, based on the operation definition data 21, specification data 22, parts information 23 and the condition of the simulation (S4). The simulation processing unit 14 changes the option of the parts arranged on each screen, according to the simulation condition, when simulating the screen change of the UI app in accordance with the screen transition specification by the instruction from the operator.

Next, the UI specification creation unit 15 creates the specification data of the UI app (screen transition specification data32, constituent parts specification data 33, parts attribute specification data 34), using the parts information, operation definition data, specification information stored in the storage unit 17. The output control unit 18 displays data on display unit 20 or outputs data to a printer etc..

The screen transition specification data 32 is specification data of the screen transition that represents the change of the screen on which the parts are implemented, according to the function transition (algorithm) of the UI app based on the operation definition data 21, specification data 22, parts information 23, and describes the transition relationship between screens in the standard specification. Therefore, transition to similar screens according to the difference in the option is not described in the screen transition specification data 32. Accordingly, the operator is able to check the original screen transition of the UI app function, referring to the created screen transition data.

The constituent parts specification data 33 is specification data that represents the parts that constitute the screen. The parts attribute specification data 34 represents the detail of the option set for the attribute of the parts that constitute the screen.

The operator is able to refer to the specification data (screen transition specification data 32, constituent parts specification data 33, parts attribute specification data 34) of the UI app, to consider the function transition specification of the UI app.

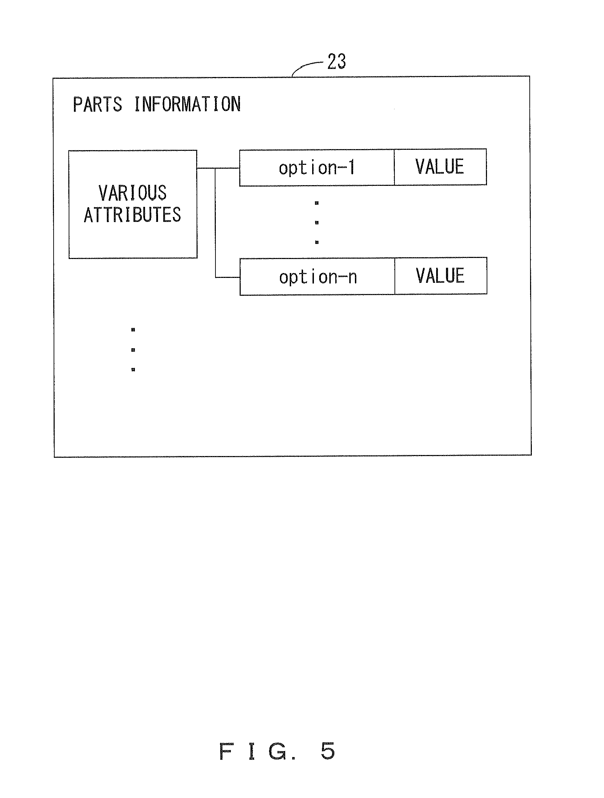

FIG. 5 presents the data structure of the attribute information included in the parts information in the present embodiment. The attribute information includes options of variation that may be set for the attribute of the type, and the set value of the set option.

As described above, parts in this embodiment are in the configuration in which information is described including the detail of the set option. For that reason, in the screen specification creation process, the screen may be created using the same UI parts with no concern for the options. Accordingly, there is no need to create similar screens for each option. In addition, in the screen transition specification creation process, since the screen transition is not branched for each option in the description, there is no need to describe complicated transition specification branched according to the difference in the option, and a screen transition specification that follows the requirement specification of the UI may be created. In addition, in the consideration in creating the specification, when executing the simulation, consideration in units of parts such as to temporarily hide the parts may be performed easily.

Meanwhile, upon commercialization of the product, the parts may be provided in a compact form, by removing parts options to which unnecessary options are assigned.

Hereinafter, the S1-1 process explained in FIG. 4 is explained in greater detail.

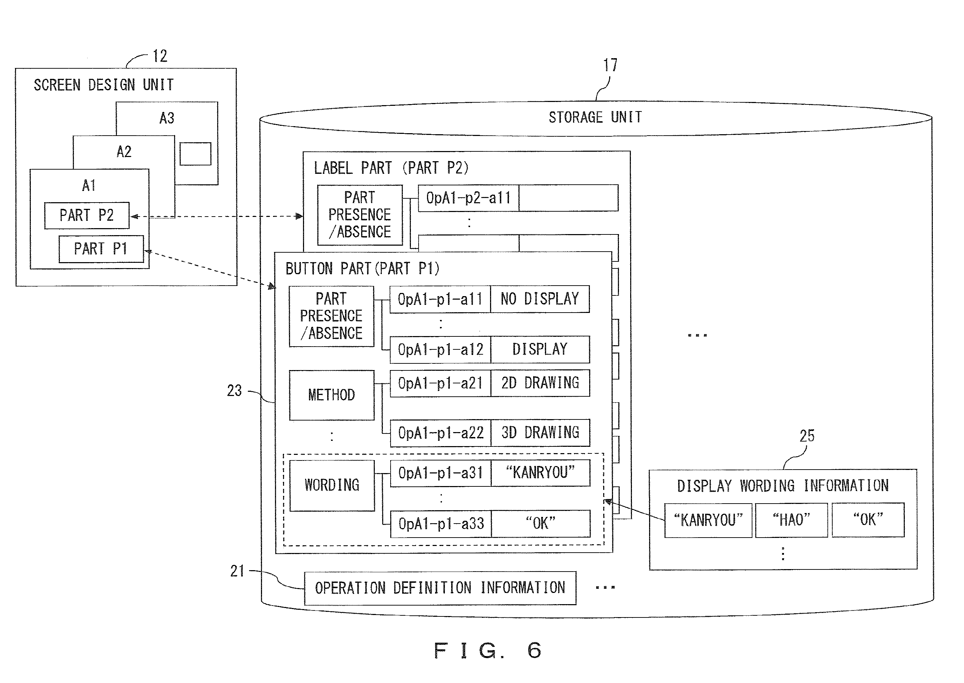

FIG. 6 is a diagram for explaining an example of the setting of the screen specification in the present embodiment. Hereinafter, the screen designing of a screen A1 including a button part (part P1) and label part (part P2) is explained as example,

The screen design unit 12 reads out the parts information 23 from the storage unit 17 based on the specification data 22. The screen design unit 12 creates the UI app screen based on the specification data 22 and parts information 23 and makes the display unit 20 display it.

The storage unit 17 stores parts information of the button part (part P1) and the label part (part P2) and the like. The button part includes, for example, attribute information regarding the "part presence/absence", "display method", "display wording" etc. The button part also includes unique attributes, which are omitted in the example in this embodiment.

The attribute "part presence/absence" represents the attribute that represents whether or not to display the button part. Options of the attribute "part presence/absence" includes "display" (option name: OpA1-p1-A11) that represents that the button part is displayed and "no display" (option name: OpA1-p1-A12) not to display the button part.

The attribute "method" (display method) represents the attribute to set the method in drawing the parts. Options of the "display method" includes a flat 2D drawing method (option name: OpA1-p1-A21) and a 3D drawing method (option name: OpA1-p1-A21) with a sense of depth.

The attribute "wording" (display wording) represents the language and the attribute to set the wording to be displayed on the button part using the language. As options of the attribute "wording", as words to represent the action that is meant with the pressing of the button part, for example, "Kanryou" in Japanese, "Hao ("Dui" or "Shi") in Chinese, "OK" in English are set.

As described above, as an attribute, the language to be used and display wordings (display wording information 25) to be displayed for each option by the language are set. When setting the attribute "wording" of the part in the screen design unit 12, the value of the display wording information 25 is displayed on the screen, and when a display wording is set, it is stored in the storage unit 17 as attribute data of the parts information.

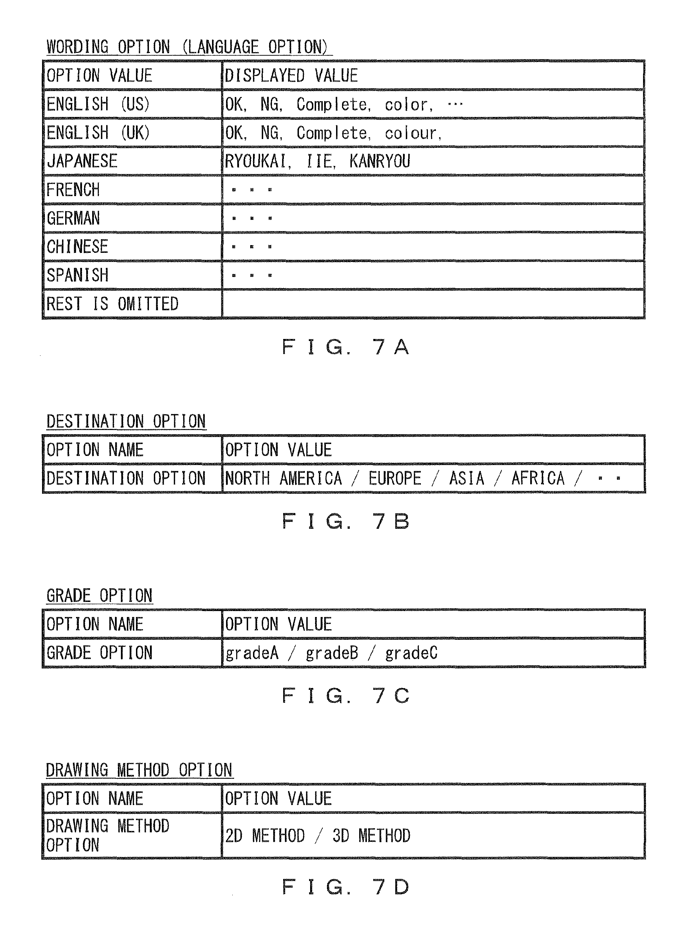

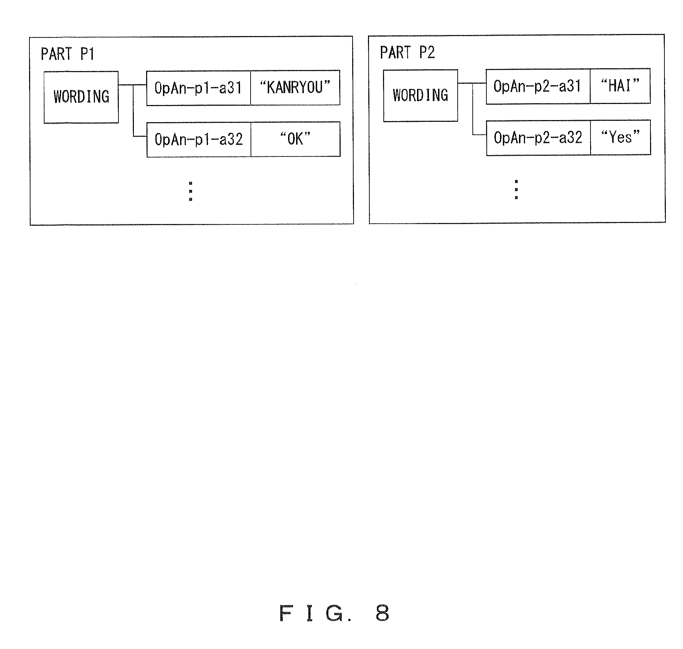

FIG. 7A-FIG. 7G present an example of lists regarding types of options and values that the options may take. FIG. 8 presents a setting example of an option for parts P1, P2 arranged on a screen An in the present embodiment.

In FIG. 7A, the wording (language) option is an option regarding the langue of the wording that the UI app displays. As the option value, a language such as English (US)/English (UK) /Japanese ...is set. The value that is actually displayed on each part according to the specified option is a wording set for each part.

For example, as illustrated in FIG. 8, a case in which the parts P1 and P2 exist on the screen An and for each, as Japanese/English, "Kanryou"/"OK", "Hai"/"Yes" are available. In specifying a wording option, to display Japanese, the operator selects "OpAn-p1-A31" for the part P1, and selects "OpAn-p2-A31" for the part P2, using the screen design unit 12.

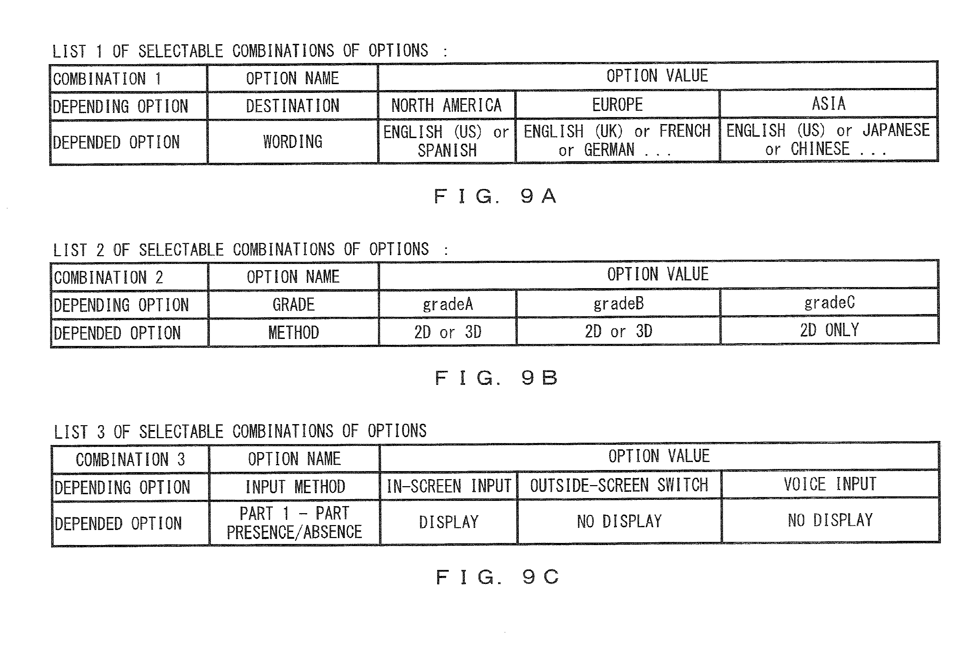

FIG. 9A-FIG. 9C are diagrams for explaining examples of selectable combinations of options in the present embodiment. As option information, information regarding the system status and conditions in using the UI application (for example, the language option), and information to switch the display of parts (for example, the drawing method option) are possible. The option adjusting unit 16 restricts options that may be set regarding the attribute of parts, according to options to set the condition to use the UI app.

For example, regarding the language option, restriction may be imposed for selectable languages according to the difference in the option regarding the delivery destination. As in FIG. 9A, when "North America" is set for the delivery destination option of the part P1 in the , screen design unit 12, for example, English (US) used in the US, Canada and Spanish that is the official language in Mexico becomes available for setting. By restricting the range of selection in setting the wording option, it becomes possible to prevent the wording of other languages from being set. Meanwhile, how the restriction is imposed in the setting of the option is described later.

A case in which the operator sets, in the screen design unit 12, a high grade "grade A" for the option regarding the product grade is considered. At this time, when creating a system in which both the 3D drawing method and the 2D drawing method may operate as the display method of parts, the option adjusting unit 16 performs the following process. That is, the option adjusting unit 16 performs controls so that, in the screen design unit 12, the operator may select both the 3D drawing method and the 2D drawing method in the screen design unit 12, as illustrated in FIG. 9B.

Meanwhile, for example, regarding the grade option, when "grade C" being a specification in which the performance of the device on which the UI app is implemented is low and the 3D drawing method may not be performed is set, the option adjusting unit 16 performs the control so that only the 2D drawing method may be selected for the display method option.

In addition, when designing a system with a specification in which a switch outside the screen is operated to give an input to a certain part as the input method, the part does not need to be displayed on the screen. In this case, the option adjusting unit 16 performs control so that, as illustrated in FIG. 9C, the operator may not select the display attributes such as the display method, wording and the like in the screen design unit 12.

As described above, when the set value of other options affect the setting of another option, the option adjusting unit 16 performs control to disable unnecessary selection in setting options of each part using the screen design unit 12.

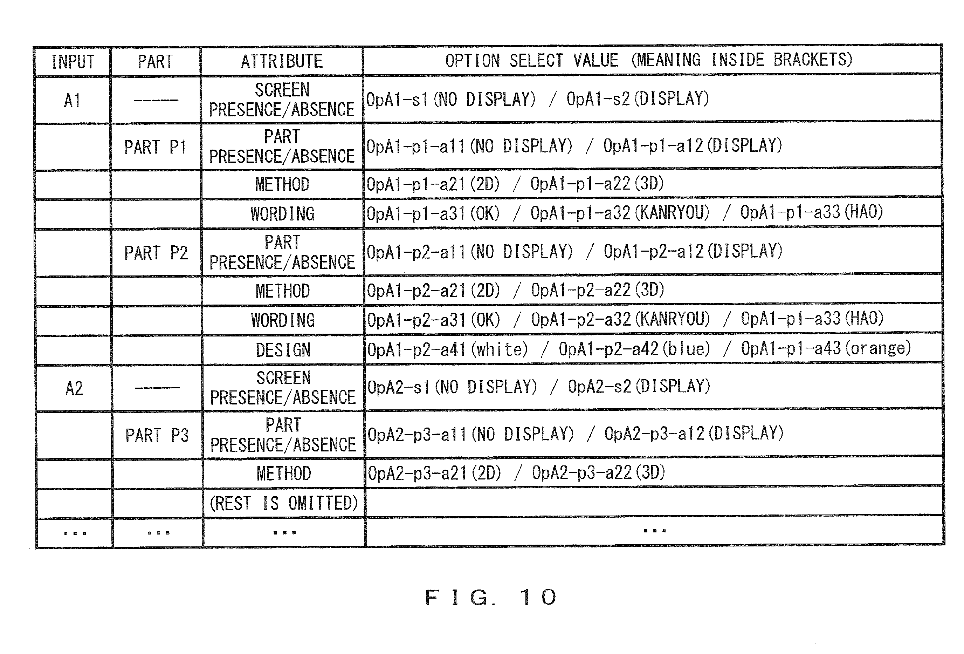

FIG. 10 presents an example of an option selection list for respective screens in the present embodiment. For example, it is assumed that options that can be set for the parts of the screen A1 are as in FIG. 10. In FIG. 10, the options are named according to the following rules. For example, option "OpA1-p1-A11" indicates that it is the first option of (attribute) A1 being attributes existing for part (part) P1 in the screen A1. Meanwhile, option "OpA1-s1" is an option of screen display/no display, which is named to mean selection (select) in the screen A1.

As presented in FIG. 9C when the "outside-screen switch" is selected as the attribute "input method" of the parts arranged on the screen in the screen design unit 12, the part P1 does not need to be displayed. Therefore, the option adjusting unit 16 performs control so that only "OpA1-p1-A11 (no display)" may be set as the part presence/absence option.

In a similar manner, "grade C" as the "grade option" of the parts arranged on the screen is selected in the screen design unit 12, the option adjusting unit 16 performs control so that only OpA1-p2-A21 (2D display) may be set in the method option of the part P2.

Meanwhile, the dependency between options is extracted and set from the specifications of the UI app to be designed and the design conditions regarding the system.

For example, options set for the part P1 and the part P2 set on the screen A1 composed of the part P1 (button part) and the part P2 (label part) are as in FIG. 10. In FIG. 10, options for the A2 and subsequent screens are omitted.

First, using the screen design unit 12, the operator may specify "OpA1-s1" or "OpA1-s2" as the option to set the screen no display/display. When "OpA1-s1" is specified, the option adjusting unit 16 does not display the screen A1.

In addition, using the screen design unit 12, the operator may specify one of "OpA1-pl-A11"/"OpA1-p1-A12", as the option to set parts no display/display regarding the part P1. When "OpA1-p1-A11" is specified, the option adjusting unit 16 does not display P1.

When "OpA1-p1-A12" is specified, the option adjusting unit 16 performs control to display the part P1. At this time, using the screen design unit 12, the operator may specify one of "OpA1-p1-A21"/"OpA1-p1-A22" as the display method.

When "OpA1-p1-A21" is specified, the part is drawn by the flat 2D drawing method. When "OpA1-p1-A22" is specified, it is specified that the part is drawn in the 3D drawing method with a sense of depth. Using the screen design unit 12, the operator may specify one of three (OpA1-p1-A31/OpA1-p1-A32/OpA1-p1-A33) options regarding the wording to be displayed. When "OpA1-p1-A31" is specified, the option adjusting unit 16 makes "OK" displayed on the part. When "OpA1-p1-A32" is specified, the option adjusting unit 16 makes "Kanryou" displayed.

For the part P2, in a similar manner, using the screen design unit 12, the operator may specify one of "OpA1-p2-A11"/"OpA1-p2-A12" as the option to set parts no display/display. Here, by setting a value that is different from the option value to set no display/display of the part P1, the presence/absence of display for the part P1 and the part P2 may be controlled independently.

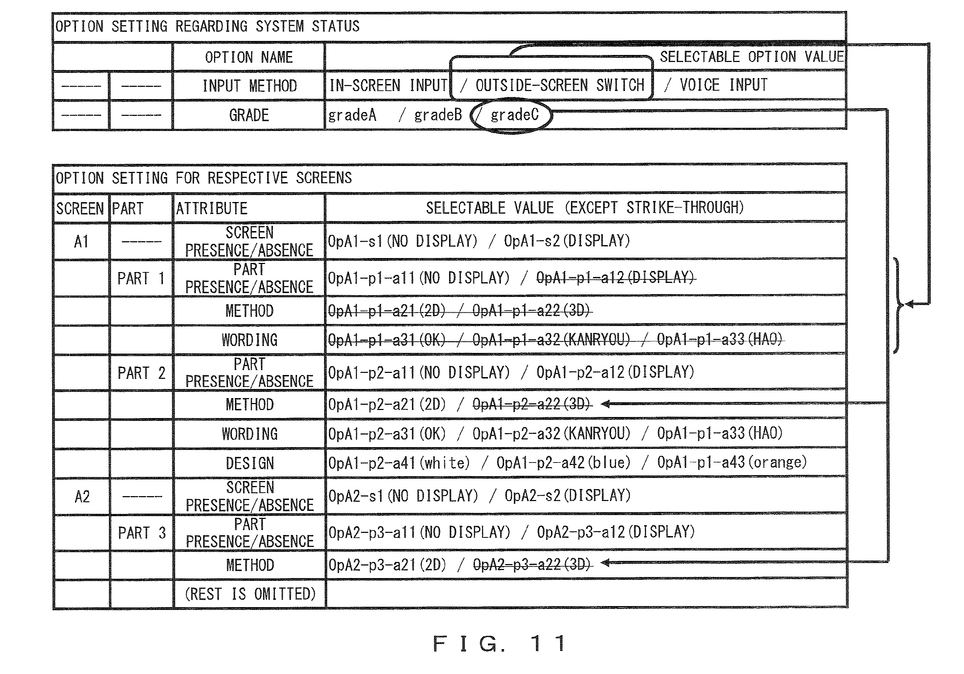

FIG. 11 is a diagram for explaining the setting of options based on the dependency between options in the present embodiment. Using Fig. 11, a case in which the set value of a certain option restricts the set value of another option is explained. For example, the screen design unit 12 may display FIG. 11 on the screen, and the operator may set each option value by means of clicking using a mouse and the like.

For example, regarding the part P1 of the screen A1, when "outside-screen switch" is set as the "input method" option, as illustrated in FIG. 9C, at the time of execution (including the time of simulation), the part P1 of the screen A1 is not displayed. Therefore, other attributes of the part P1 do not need to be specified.

In a similar manner, regarding the part P2 of the screen A1, when "grade C" is set as the "grade" option, as illustrated in FIG. 9B, at the time of execution (including the time of simulation), the display of the part P2 is performed in the 2D method. Therefore, the method option of the part P2 does not need to be set.

As a setting method of each option, as illustrated in FIG.9A-FIG. 9C, a selection value list of options for respective screens or parts may be displayed, and the option may be specified from it.

When there is a dependency relationship between options set in advance as FIG. 9A-FIG. 9C, the option adjusting unit 16 detects options that do not need to be set, according to the option specified by the operator. After that, the option adjusting unit 16 disables the setting of the detected option (expressed with a strike-through in FIG. 11).

Next, the process S3 explained in FIG. 4 is explained in greater detail.

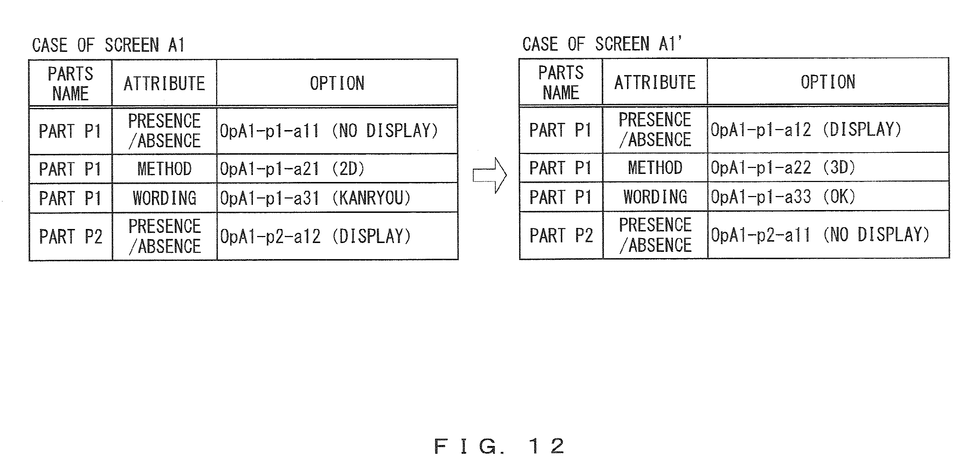

FIG. 12 is a diagram for explaining the change of the option between the screen A1 and the screen A1' that share the base screen but have different option for the parts. Before executing the simulation, the operator sets the option according to the simulation condition.

For example, a case of executing a simulation about the screen A1 is considered. In advance, "OpA1-p1-A11 (no display)" is set regarding the attribute "presence/absence of display" of the part P1. Regarding the attribute "display method" of the part P1, "OpA1-p1-A21 (2D)" is set. Regarding the attribute "wording" of the part P1, "OpA1-p1-A31 (Kanryou)" is set. Regarding the attribute "presence/absence of display" of the part P2, "OpA1-p2-A12 (display) " is set. In this case, when the simulation is executed, on the executed screenA1, the part P1 is not displayed, with its display method being the 2 D drawing method, and "Kanryou" is displayed as the wording. In addition, in this case, the part P2 is displayed.

A case of executing a simulation about the screen A1' is considered. In advance, "OpA1-p1-A12 (display)" is set regarding the attribute "presence/absence of display" of the part P1. Regarding the attribute "display method" of the part P1, "OpA1-p1-A22 (3D)" is set. Regarding the attribute "wording" of the part P1, "OpA1-p1-A33 (OK) " is set. Regarding the attribute "presence/absence of display" of the part P2, "OpA1-p2-A11 (no display) " is set. In this case, when the simulation is executed, the part P1 is displayed, with its display method being the 3D drawingmethod, and "OK" is displayed as the wording. In addition, in this case, the part P2 is not displayed.

As described above, options of the respective parts of the screen being the simulation target may be changed independently. Thus, when performing the simulation, according to its condition, the simulation may be performed after making various changes to a plurality of options.

Next, an example of the UI design support apparatus in the present embodiment is explained.

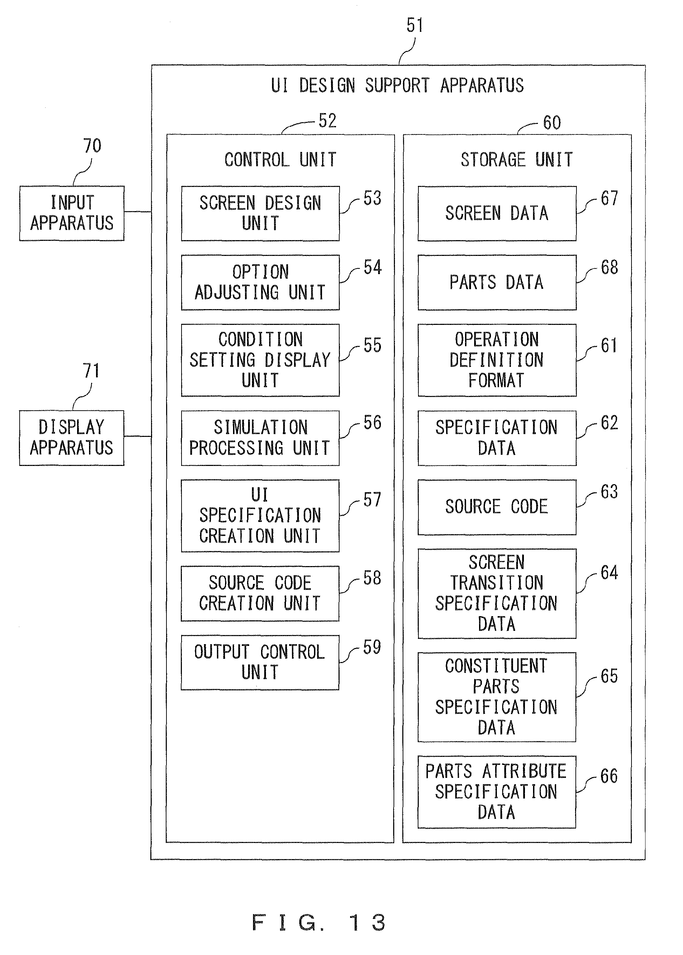

FIG. 13 is a block diagram presenting the configuration of the UI design support apparatus according to an example of the present embodiment. In the actual specification design of the UI app, the operator expresses the flow of processes of the UI app in the transition specification, and designs what screens are needed in it. After that, the operator specifically designs the configuration of the screen using display parts with options. At that time, when new parts are needed, the operator performs parts development. Here, parts refer to parts whose specification is confirmable. The operation module on the target machine and form data do not need to be prepared.

At the stage where a series of screens are ready, using the UI design support apparatus 51, for example, the operator makes the screen in the standard specification with no consideration of options operate and tests whether the UI operations are in line with the requirement specification. After that, the operator performs operation checks of various options, and after that, using the UI design support apparatus 51, creates the specifications for respective options and the source codes to be executed on the target machine for respective options.

In creating the source codes for respective options, the UI design support apparatus 51 does not need to expand the codes prepared for operations of unnecessary options in respective display parts.

The UI design support apparatus 51 is connected to an input apparatus 70 and a display apparatus 71. The UI design support apparatus 51 includes a control unit 52 and a storage unit 60.

The input apparatus 70 is the one to input description regarding the specification and the like, which is a keyboard, a mouse, a microphone, and the like. Meanwhile, the display apparatus 71 is, as described later, the one to display the view related to the operation definition, which is a monitor (or a display, a touch panel).

The control unit 52 includes an internal memory for storing a program that defines various process procedures and the like and required data, and executes various processes. The control unit includes a screen design unit 53, an option adjusting unit 54, a condition setting display unit 55, a simulation processing unit 56, a source code creation unit 58, a UI specification creation unit 57.

The screen design unit 53 displays the operation definition format that makes information regarding the condition for the parts displayed on the operation screen of the UI to operate and information regarding the detail of the process of the parts to operate described in a prescribed format, and obtains the description regarding the specification of the parts based on a operation definition format 61. Specifically, thescreendesign unit 53 displays a parts display setting view to set functional parts to operate the UI parts and various functions on the screen and an operation definition related view related to the operation definition on the display apparatus 71. In addition, the screen design unit 53 obtains an operation instruction from the operator via the input apparatus 70, and performs selection of the operation definition format 61 stored in the storage unit 60 and editing of the attribute of the parts.

In setting the attribute of the screen displayed the parts to be arranged on the screen by screen design unit 12, when an option from a plurality of options is set, the option adjusting unit 54 performs the following process. That is, the option adjusting unit 54 restricts options that may be set for other attributes, according to the selected option.

In setting the simulation execution condition, the condition setting display unit 13 makes the display apparatus 71 display options of the attribute of parts stored in the storage unit 17 in a selectable manner. For example, the condition setting display unit 13 makes the option information set in the screen design unit 53 displayed in a selectable list format. Accordingly, the operator may select the option in accordance with the simulation execution condition from the list.

The simulation processing unit 56 displays the operation screen of the user interface, based on information regarding the condition for the parts to operate, information regarding the detail of the process of the parts to operate, option information that the operator selected from options displayed by the condition setting display unit 13. Accordingly, the operator may test the operation of the parts displayed on the operation screen of the user interface.

The UI specification creation unit 57 creates screen transition specification data 64, constituent parts specification data 65, parts attribute specification data 66 using the parts information, operation definition format and the specification data stored in the storage unit 60.

The source code creation unit 58 creates a source code 63 using information regarding the condition for the parts to operate, information regarding the detail of the process of the parts to operate, and information regarding the attribute of the parts.

The storage unit 60 stores data and a program required for various processes by the control unit 52. In addition, the storage unit 60 stores , screen data 67, parts data 68, operation definition format 61, specification data 62, source code 63, screen transition specification data 64, screen parts specification data 65, parts attribute specification data 66.

The screen data 67 is data including the attribute of the screen itself such as the size, color, shape and the like. The parts data is data including data regarding the attribute of the parts explained in FIG. 5.

The operation definition format 61 exists for respective categories. The categories include the conditional operation and the processing operation. In addition, categories of the conditional operation includes the event, numerical value comparison, character string comparison, and categories of the processing operation includes the numerical value set, character string set, method execution, screen transition. The specification data 62 is, for example, specification data in a tree structure described later.

The source code 63 is a source code created by the source code creation unit 58.

Here, the screen edit view, the parts display setting view, the operation definition related view displayed by the screen design unit 53 are respectively explained below using drawings.

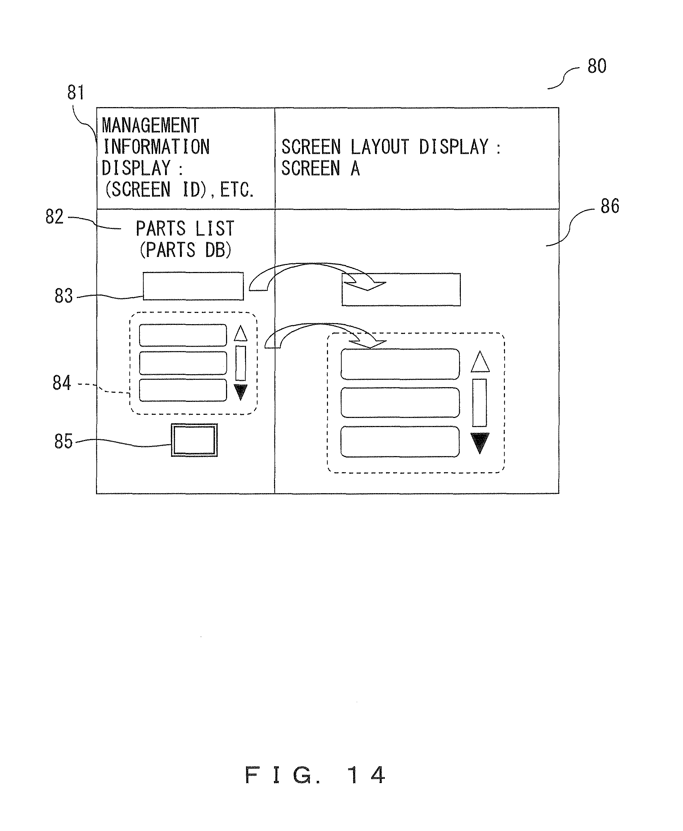

FIG. 14 is a diagram presenting a display example of a screen edit view according to an example of the present embodiment. A screen edit view 80 displays "management information display" 81, "parts list" 82, "screen layout display" 86. The "management information display" 81 displays management information regarding the screen to be edited.

The "parts list" 82 displays the list of UI parts (existing in the data base in the system, for example) that may be displayed on the screen. In FIG. 14, as an example of UI parts, a label part 83, a list display part 84, a button part 85 are displayed in the parts list 82.

The "screen layout display" 86 displays the screen layout. An operation instruction is received from the UI specification creator via the input apparatus 70, and parts desired to be set are arranged on a screen layout 86 by drag and drop, to create the screen. In the example in FIG. 14, the label part 83 and the list display part 84 are taken out from the parts list 82, and the label part 83 and the list display part 84 are arranged on the screen A displayed on the screen layout display 86.

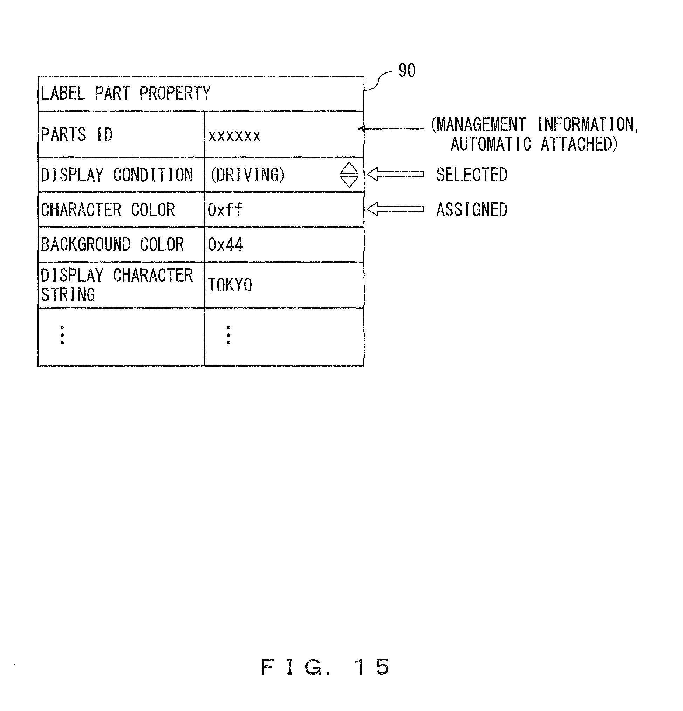

FIG. 15 is a diagram presenting a display example of the display setting view of parts according to an example of the present embodiment. A parts display setting view 90 is displayed by, for example, double clicking a prescribed part in the "screen layout display" 86 of the screen edit view. In the parts display setting view 90, the attribute (the shape, color, display condition and the like) of the arranged UI parts is specified.

Next, the operation definition related view. In the operation definition related view, setting of actions of the respective UI parts is received. In the setting of actions of the UI parts, as UI operation definition data being a unified format of the operation condition and the process of the operation, conditional operation data as to the form of the instruction from the user and whether or not to execute the processing operation process is created. At that time, an operation definition format in a form in which verbal expressions of the operation condition and the processing operation are attached is used. The operation definition related view is composed of the operation definition format select view and the parts attribute select view. First, by means of the operation definition format select view, the operator selects the operation definition format 61 for creating the operation definition data.

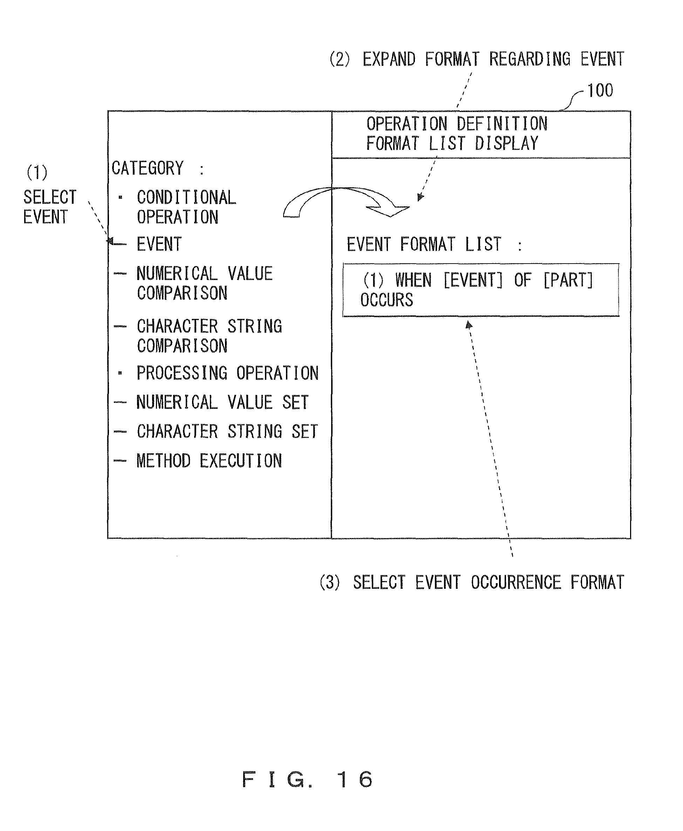

FIG. 16 is a diagram presenting a display example of an operation definition format select view according to an example of the present embodiment. First, the screen design unit 53 receives, in the left category window of an operation definition format select view 100, a selection instruction as to whether it is a condition operation or a processing operation from the categories of the operation definition format 61, and what type of property is to be operated. Then, a category is selected by mouse clicking from the left category window of the operation definition format select view. Then, the screen design unit 53 displays, on the right side of the operation definition format select view 100, an operation definition format list belonging to the selected category. Upon receiving a selection of the operation definition format 61 in it, the screen design unit 53 displays the parts attribute select view on the screen.

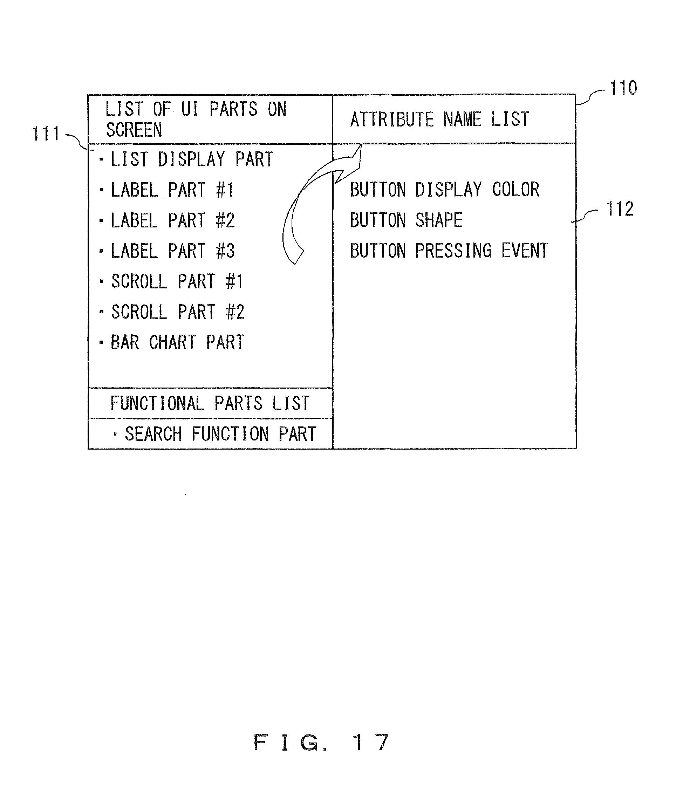

FIG. 17 is a diagram presenting a display example of a parts attribute select view according to an example of the present embodiment. In a parts attribute select view 110 parts to be set in the selected operation definition format 61, and as the attribute of the parts, a property, event, method are specified. For example, in the parts attribute select view 110, a parts list 11 existing on the screen considering the current specification is expanded on the left side of the view. When a selection of a part to be the target is received in it, an attribute list 112 registered for the part is expended on the right side view. By selecting an attribute in the attribute list 112, the part and attribute may be specified. Accordingly, the operation definition data may be created eventually.

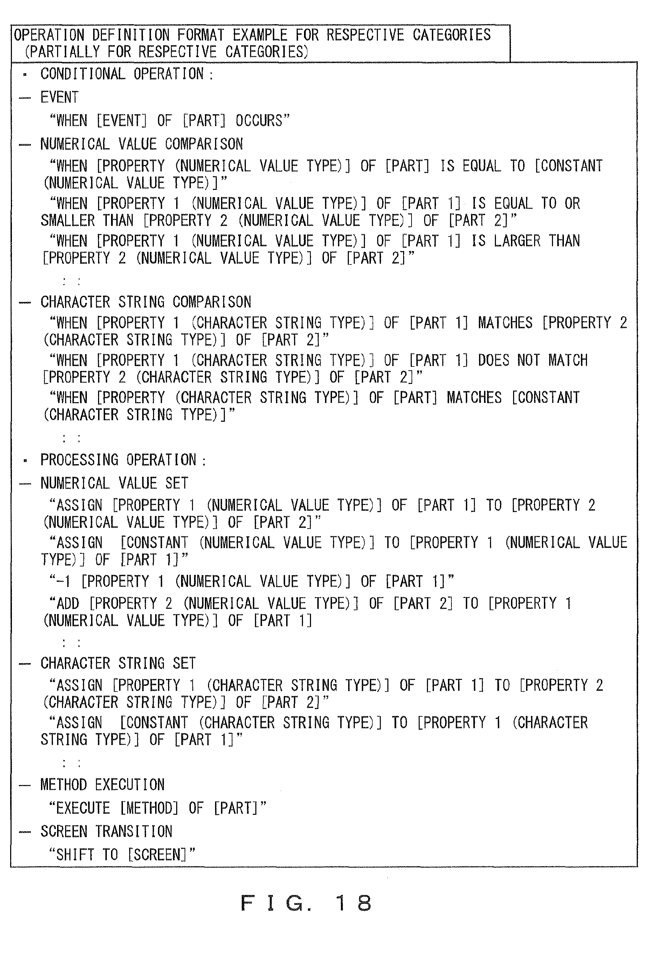

FIG. 18 presents an example of an operation definition format according to an example of the present embodiment. The operation definition format 61 is prepared for respective categories. The categories include "conditional operation" and "processing operation". The "conditional operation" represents the operation of the operation of parts. The "processing operation" represents the operation detail of the parts.

Categories of the conditional operation include an event, numerical value comparison, character string comparison. Categories of the processing operation include a numerical value set, character string set, method execution, screen transition. For example, the UI design support apparatus 51 stores, in the event category of the conditional operation, the operation definition format "at the time when an event of the parts occurs".

As described above, the screen design unit 53 makes the launch event, the conditional operation and the processing operation described according to the operation definition format 61, and makes the storage unit 60 store the described data as specification data 62.

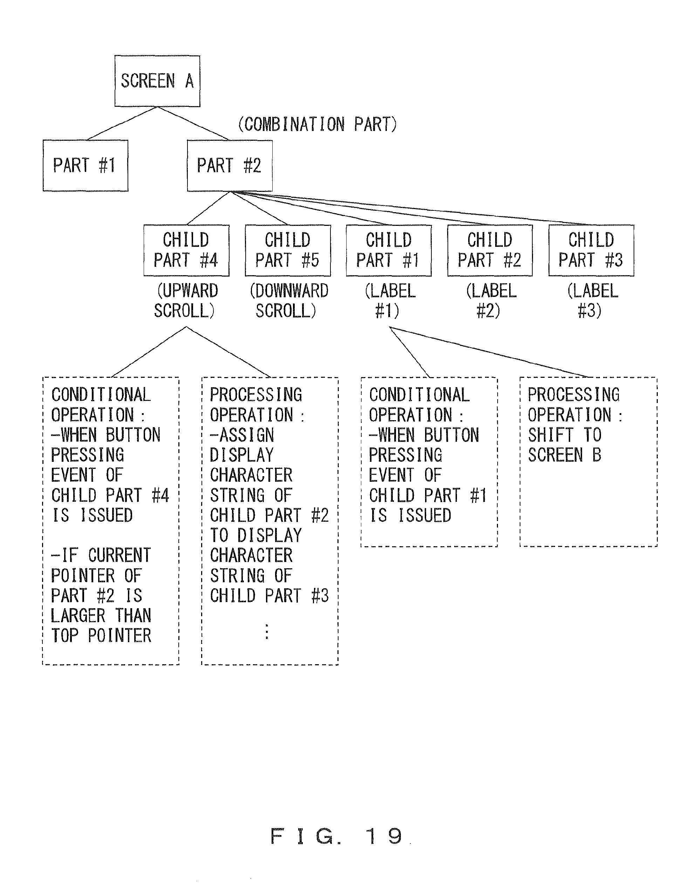

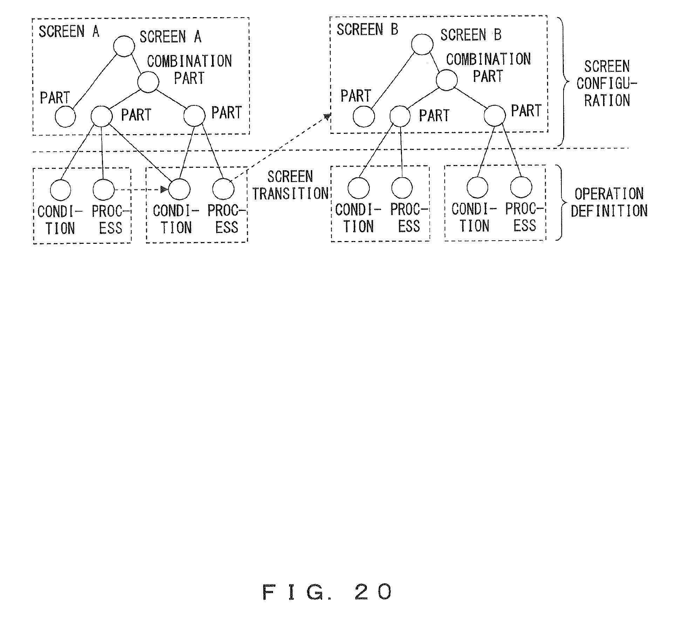

FIG. 19 and FIG. 20 are diagrams presenting an example of specification data in a tree structure. The screen design unit 53 converts the specification data 62 into data ina tree structure, as illustrated in FIG. 19 and FIG. 20. In FIG. 19, the screen A is the top node, and a part #1 and a part #2 being a combination part are connected with the screen A as low-order nodes. In addition, to the part #2 being a combination part, child parts #1-5 are connected as low-order nodes.

Meanwhile, in the child parts, the conditional operation and the processing operation are defined. For example, for a label #1 being a child part #1, "when a button pressing event of a child part #1 is issued", is defined as the conditional operation, and "shift to the screen B" is defined as the processing operation. As described above, when there is a screen transition, as illustrated in FIG. 20, data in a tree structure so as to shift from the screen A to the screen B is created.

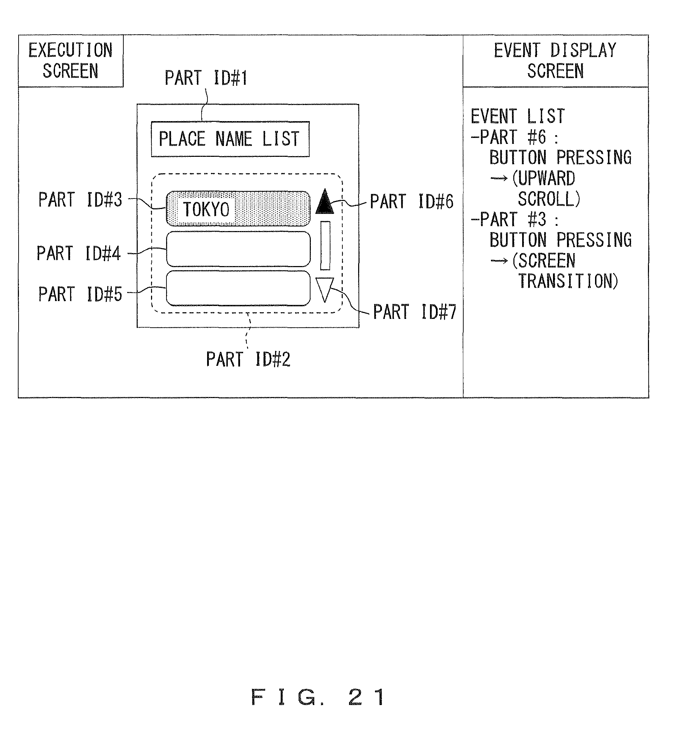

The simulation processing unit 56 displays the operation screen of the UI based on the option set by the operator as one of the simulation execution conditions, the information regarding the condition for the parts to operate and the information regarding the detail of the process of the parts to operate. The operator tests the operation of parts displayed on the operation screen of the UI. Specifically, the simulation processing unit 56 makes the set option information reflected on the simulation operation screen. The simulation processing unit 56 scans the specification data 62 of each screen in a tree structure from the top node, and extracts a part for which an event is set. Then, the simulation processing unit 56 displays, as illustrated in FIG. 21, on the simulation operation screen, an event list along with the screen being executed.

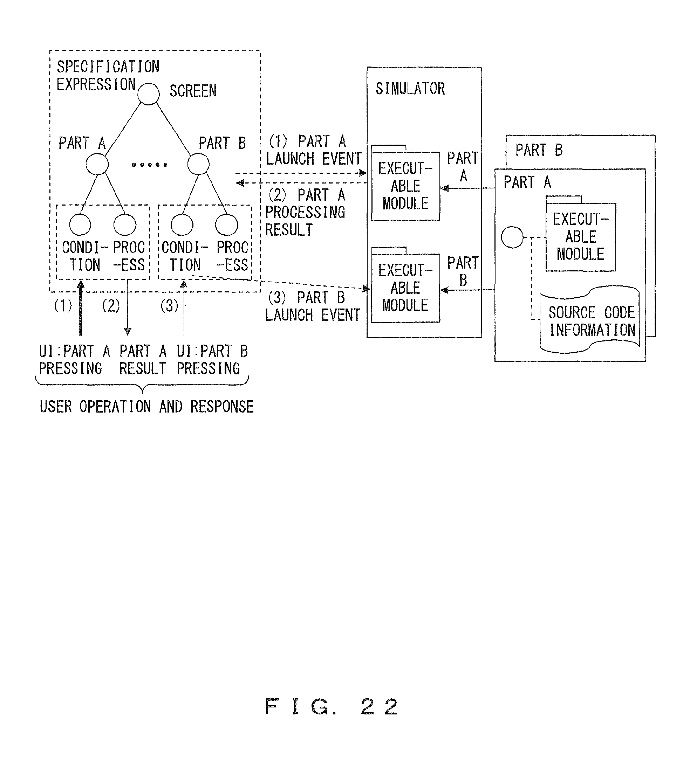

FIG. 21 is a diagram presenting an example of a simulation operation screen according to an example of the present embodiment. After displaying a simulation operation screen, the operator makes the event in the execution screen issued and tests the UI operation, referring to the event list being a list of events displayed on the event display screen. In this way, the operation check for all events may be performed without omission. Then, upon starting the execution of the simulation by making an event such as button pressing occur on the simulation execution screen, the simulation processing unit 56 sends notification of the operation to the respective parts. To the respective parts, an execution module is attached, and the module is launched to execute the conditional operation/processing operation. Depending on the detail of the processing operation, an operation of another part may be specified. In that case, the simulation processing unit 56 sends a notification to the execution module of another part. For example, as illustrated in FIG. 21, the processing detail at the time when an upward scroll part of the part #6 is pressed may be checked on the simulation operation screen. Hereinafter, using the FIG. 22, the simulation execution process is explained.

FIG. 22 is a diagram explaining a simulation execution process according to an example of the present embodiment. When there isaprocessingofanUIpartA (see (1) in FIG. 22) by the operation of the operator, a notification of a part A launch event is sent to the simulator. Then, an executable module of the simulator executes the operation according to the description of the UI operation definition data, and outputs a part A processing result (see (2) in FIG. 22). Meanwhile, in a similar manner, when there is a processing of an UI part B (see (3) in FIG. 22) by user operation, a notification of a part B launch event is sent to the simulator. Then, an executable module of the simulator executes an operation according to the description of the UI operation definition data.

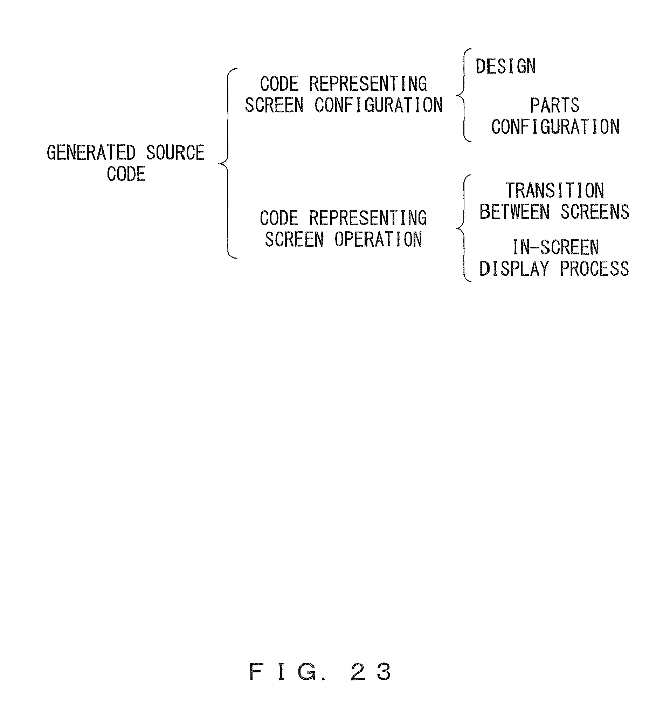

Next, creation of the source code is explained. The source code creation unit 58 creates the source code using information regarding the condition for the parts to operate, information regarding the detail of the process of the parts to operate, and information regarding the attribute of the parts. Specifically, the source code creation unit 58 extracts and encodes appearance-related specification information of screen parts from the property. Then, the source code creation unit 58 performs source code conversion of specification information of the operation definition, when operation definition data exists in the UI parts. Next, when a child node such as a combination part exists, the source code creation unit 58 also creates a appearance-related code and the source code 63 regarding the operation definition, also for the child node. The source code creation unit 58 stores the created source code in the storage unit 60. The created source code 63 becomes a code that realizes the function illustrated in FIG. 23.

FIG. 23 is adiagrampresenting an example of the configuration of the source code according to an example of the present embodiment. The source code 63 includes the "code representing the screen configuration" that specifies the parts configuration and appearance of each screen and the "code representing the screen operation" that represents the display process included in each screen and the transition between screens. The source code creation unit 58 creates the source code 63 from specification information that specifies the form of the UI parts themselves and control information that specifies the UI operation of the UI parts, for all the parts existing on the screen.

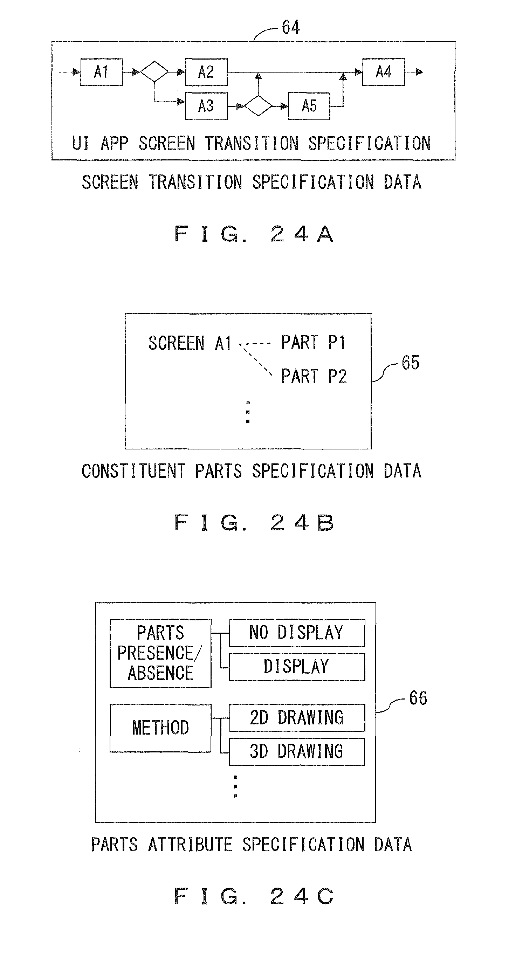

FIG. 24A-FIG. 24C present an example of the specifications, according to an example of the present embodiment. The UI specification creation unit 57 the specification (screen transition specification data 64, constituent parts specification data 65, parts attribute specification data 66) of the UI app using the parts data 68, specification data 62 stored in the storage unit 60, and outputs it to the display apparatus 71 or an output apparatus such as a printer.

The screen transition specification data 64 is a specification of the screen transition created based on the specification data in FIG. 20, which describes the screen transition by the specification of the screen change to be the base that is not dependent on options. Therefore, the shift to similar screens due to the difference in the option is not described in the screen transition specification data 64. Accordingly, the operator is able to check the original screen transition of the UI app function, referring to the created screen transition data.

The constituent parts specification data 65 is specification data created based on the specification data in FIG. 19, which is specification data presenting parts that constitute the screen. The parts attribute specification data 66 is specification data that represents the detail of the option set in the attribute of parts that constitute the screen. The parts attribute specification data 66 may be output, for example, in units of screens, in units of parts, in units of attributes, in units of options as well.

Meanwhile, the display form of the screen transition specification data 64, constituent parts specification data 65, parts attribute specification data 66 is not limited to the form described in FIG. 24A-FIG. 24C, and various display forms may be used such as characters, diagrams, sheet formats and the like. In addition, the screen transition specification data 64, constituent parts specification data 65, parts attribute specification data 66 may be output using not only the display apparatus 71 but also an output apparatus such as a printer.

Next, the process by the UI design support apparatus 51 according to an example of the present embodiment is explained.

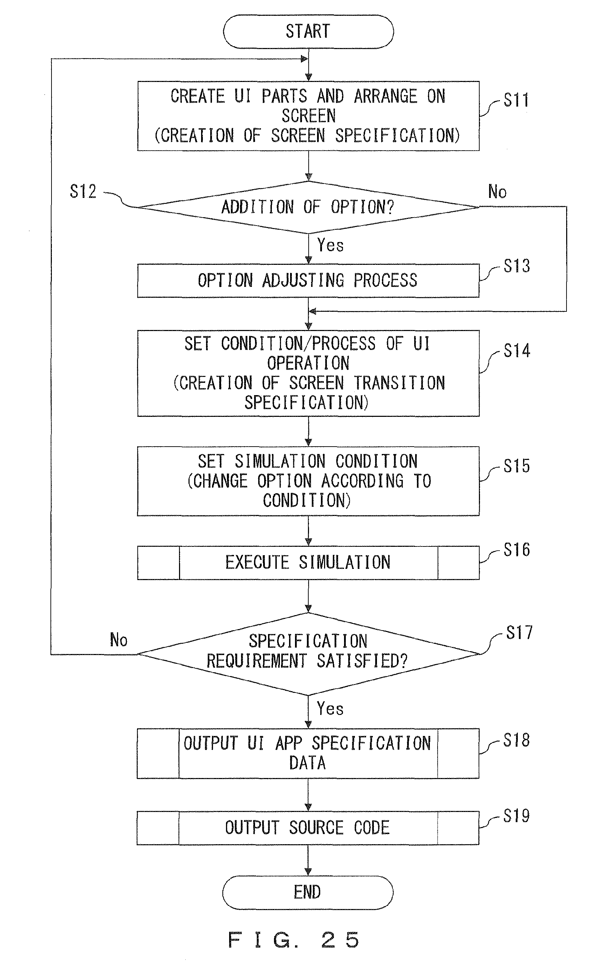

FIG. 25 presents an overall process flow of the UI design support apparatus according to an example of the present embodiment. First, the operator creates UI parts using the screen edit view 80, parts display setting view 90, operation definition format select view 100, parts attribute select view 110 displayed on the screen, and arranges the UI parts on the screen (S11)*.* Here, the operator arranges the UI parts on the screen, and sets properties such as the form/size/display information.

In the screen design unit 53, UI parts required for constituting the menu displayed on the screen are selected, and arranged on the screen, and setting such as the size, shape, color (normal color, color for pressing), display condition and the like is received. The screen design unit 53 creates the specification data 62 of the screen based on the information set in the screen edit view 80, parts display setting view 90, operation definition format select view 100, parts attribute select view 110. When no option is added to the screen (No in S12), the process proceeds to S14.

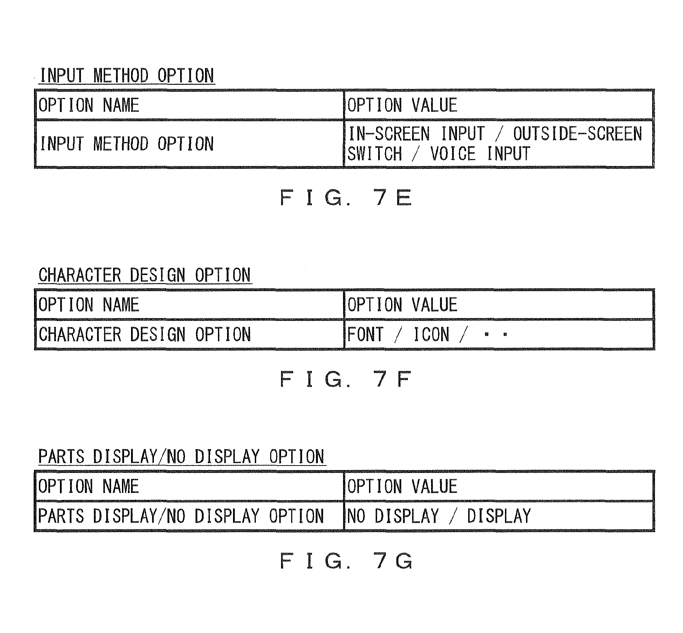

When an option is added to the screen ("Yes" in S12), the option adjusting unit 54 performs the following process. That is, the option adjusting unit 54 sets the option after checking the dependency relationship between options based on the option set to the attribute of the parts display setting view 90 or the parts attribute select view 110, as explained in FIG. 7 (FIG.7A-FIG. 7G)-FIG. 11 (S13).

The screen design unit 53 creates operation definition data including the launch event, conditional operation, processing operation of the UI operation definition, using the operation definition format 61, for the respective UI parts. The screen design unit 53 creates the specification data using the operation definition data (S14).

The operator sets the simulation execution condition using the input apparatus 70 for the screen being the simulation target displayed on the display apparatus 71 (S15). Here, the operator performs setting of the option of parts in the screen being the simulation target, displayed by the condition setting display unit 13, according to the simulation condition.

The simulation processing unit 56 executes a simulation about the target screen using the created specification data 62, and the simulation execution condition set in S15 (S16).

The operator operates the simulation screen displayed on the display apparatus 71 using the input apparatus 70. By doing so, the operator tests whether the parts layout and the operation of the UI parts satisfy the requirement specification (S17).

When the parts layout and the operation of the UI parts do not satisfy the requirement specification ("No" in S17), the process returns to S11. When the parts layout and the operation of the UI parts satisfy the requirement specification ("Yes" in S17), the operator instructs, using the input apparatus 70, the UI design support apparatus 51 to output the specification or the source code.

Based on the instruction, the UI specification creation unit 57 creates the screen transition specification data 64, constituent parts specification data 65, parts attribute specification data 66, using the parts data 68, specification data 62 and the like stored in the storage unit 60 (S18). The output control unit 59 makes the display apparatus 71 display the created screen transition specification data 64, constituent parts specification data 65, parts attribute specification data 66, or makes a printer and the like output them.

Meanwhile, based on the instruction, the source code creation unit 58 creates the source code 63 using information regarding the condition for the parts to operate, information regarding the detail of the process of the parts to operate, and information regarding the attribute of the parts (S19). The output control unit 59 makes the display apparatus 71 display the created source code 63 on the display apparatus 71, or makes a printer and the like output them.

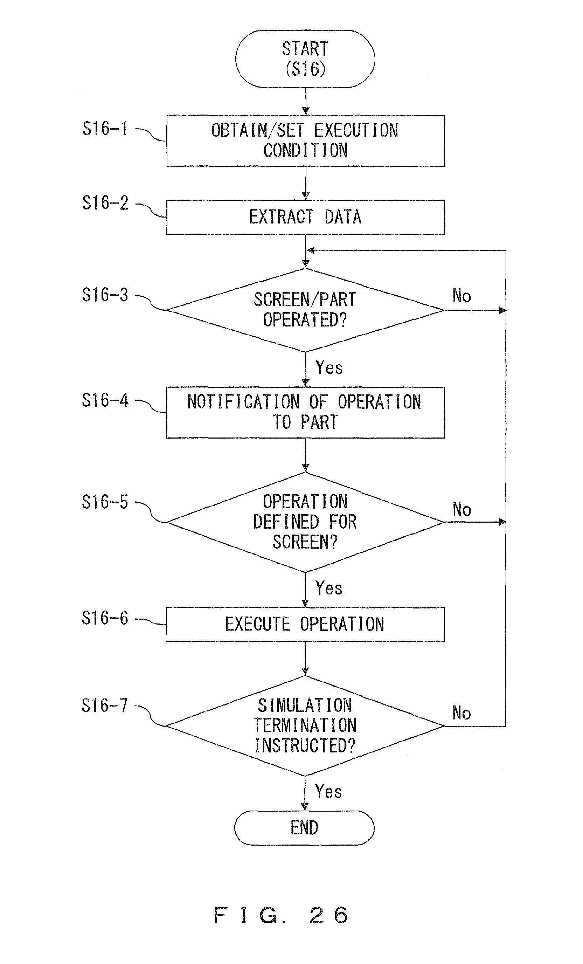

FIG. 26 is a flow presenting an example of details of the process in S14. The simulation processing unit 56 obtains a simulation execution instruction and its execution condition. The simulation processing unit 56 sets the execution condition of the simulation (S16-1). At this time, the simulation processing unit 56 changes the option information based on the option information that the operator selected from options displayed by the condition setting display unit 13.

The simulation processing unit 56 scans the specification data 62 from the top node, and extracts a part for which an event is set (S16-2). The simulation processing unit 56 judges, from input information from the input apparatus 70, whether the screen or a part displayed on the display apparatus 71 have been operated (S16-3). When the screen or a part has been operated ("Yes" in S16-3), the simulation processing unit 56 sends a notification of a UI operation instruction to the program that forms the UI parts of the screen (S16-4). The simulation processing unit 56 judges, using operation definition data, whether an operation is defined for the part (S16-5).

As a result, when it is judged that no operation is defined for the part ("NO" in S16-5), the simulation processing unit 56 returns to S16-3, and waits for the screen or a part to be operated. Meanwhile, when it is judged that an operation is defined for the part ("Yes" in S16-5), the simulation processing unit 56 executes the operation using an executable module attached to the UI part (S16-6).

Then, the simulation processing unit 56 judges whether or not there has been a simulation termination instruction (S16-7). When there is no simulation termination instruction ("No" in S16-7), the simulation processing unit 56 returns to S16-5 and waits for the screen or a part to be operated. When there has been a simulation completion instruction ("Yes" in S16-7), the present flow is completed,

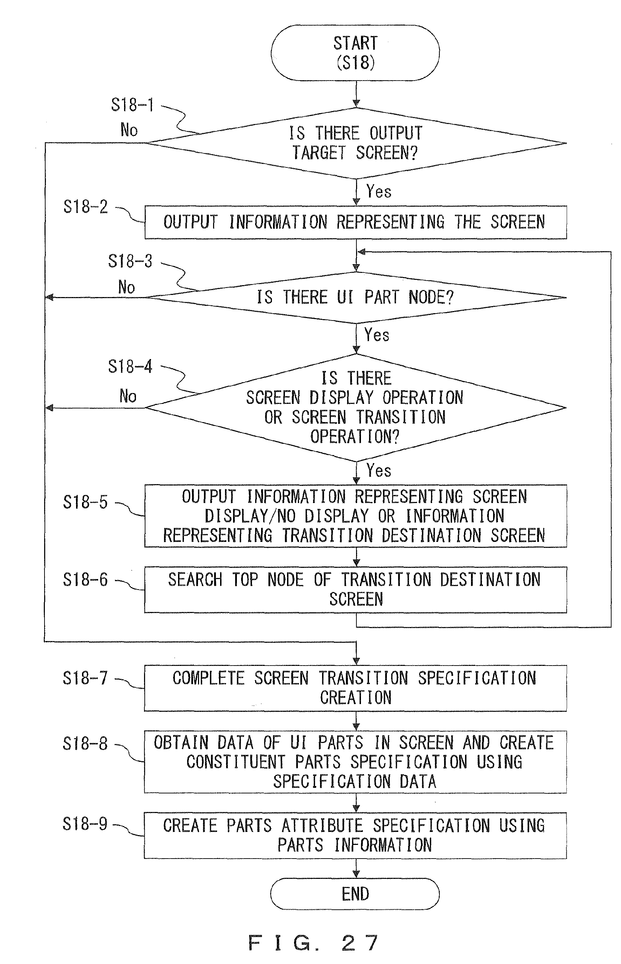

FIG. 27 is a flow illustrating an example of details of the process in S18. The UI specification creation unit 57 scans the specification data 62 from the top node based on the specification data the screen information specified by the input apparatus 70, and judges whether there is an output target screen (S18-1). When there is no output target screen ("No" in S18-1), the process proceeds to S18-17. When there is an output target screen ("Yes" in S18-1), the UI specification creation unit 57 outputs information representing the output target screen to a screen transition specification data file (S18-2).

Next, the UI specification creation unit 57 judges, in the specification data 62, whether there is a UI part node under its output target screen (S18-2). When there is no UI part node ("No in S17-3), the process proceeds to S18-17. Meanwhile, when there is a UI part node ("Yes" in S17-3), the UI specification creation unit 57 judges whether there is data regarding the display/on display operation of the screen or the screen transition operation, in the operation definition data corresponding to the UI part node (S18-4). When there is no data regarding the display/on display operation of the screen or the screen transition operation, in the operation definition data corresponding to the UI part node ("No" in S18-4), the process proceeds to S18-7.

When there is data regarding the display/on display operation of the screen or the screen transition operation, in the operation definition data corresponding to the UI part node ("Yes" in S18-4), the UI specification creation unit 57 performs the following process. That is, the UI specification creation unit 57 outputs information representing screen display/no display or information representing the transition destination screen to the screen transition specification data file (S18-5).

The UI specification creation unit 57 obtains specification data corresponding to the searched transition destination screen from the operation definition data, and scans the specification data 62 from the top node, to detect an output target screen (S18-6). After that, the process returns to S18-3.

The UI specification creation unit 57 repeats S18-1 through S18-6, and creates the screen transition specification data file (S18-7). The output control unit 59 outputs the screen transition specification data file to the display apparatus 71 or an output apparatus such as a printer, as screen transition specification data 64.

The UI specification creation unit 57 obtains UI parts data in the screen from the specification data, and outputs the UI parts data to a constituent parts specification data file (S18-8). The output control unit 59 outputs the constituent parts specification data file to the display apparatus 71 or an output apparatus such as a printer as constituent parts specification data 65.

The UI specification creation unit 57 obtains parts information corresponding to the UI parts data obtained in S18-8, and outputs the parts information to a parts attribute specification data file (S18-9). The output control unit 59 outputs the parts attribute specification data file to the display apparatus 71 or an output apparatus such as a printer as parts attribute specification data 66.

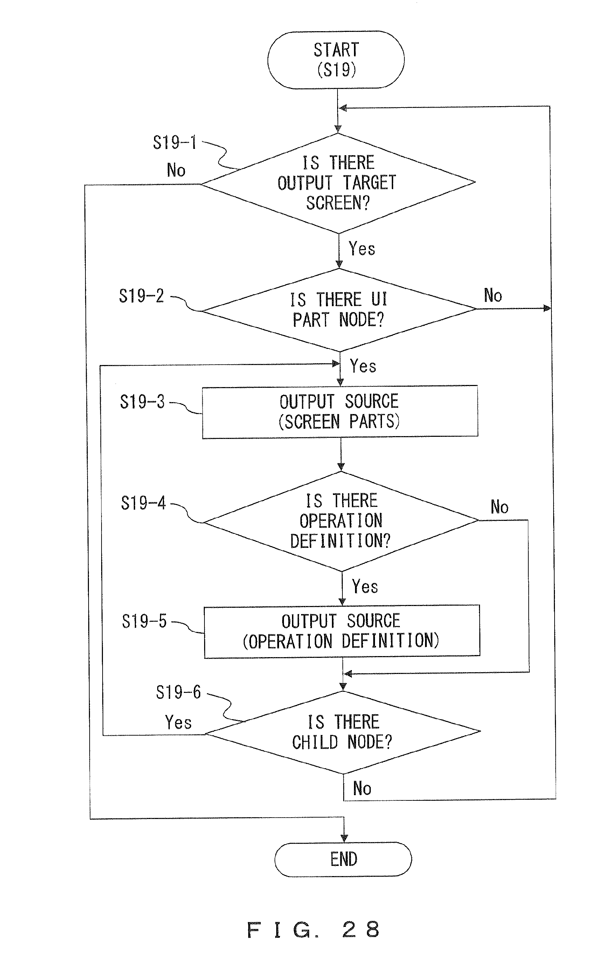

FIG. 28 is a flow illustrating an example of details of the process in S19. The source code creation unit 58 judges whether there is an output target screen in the specification data (S19-1). An output target screen ("Yes" in S19-1), the source code creation unit 58 judges whether there is a UI part node under the output target screen (S19-2). When there is no UI part node ("No" in S19-2), the process returns to S19-1. Meanwhile, when there is a UI part node ("Yes" in S19-2), the source code creation unit 58 extracts and encodes specification data related to the appearance of screen parts from the property and outputs a source code (S19-3).

Then, the source code creation unit 58 judges whether there is an operation definition (S19-4). When there is an operation definition ("Yes" in S19-4), the source code creation unit 58 performs source code conversion of the specification information of the operation definition and outputs the source code (S19-5). After that, the source code creation unit 58 judges whether there is a child node (S19-6). When there is a child node ("Yes" in S19-6), the source code creation unit 58 returns the process of S19-3, and creates the appearance related code and the code related to the operation definition for the child node as well. After that, when there is no child node ("No" in S19-6), the source code creation unit 58 returns to step S19-1. In S19-1, when there is no screen for which the source code output is not performed ("No" in S19-1), the source code creation unit 58 terminates the process.

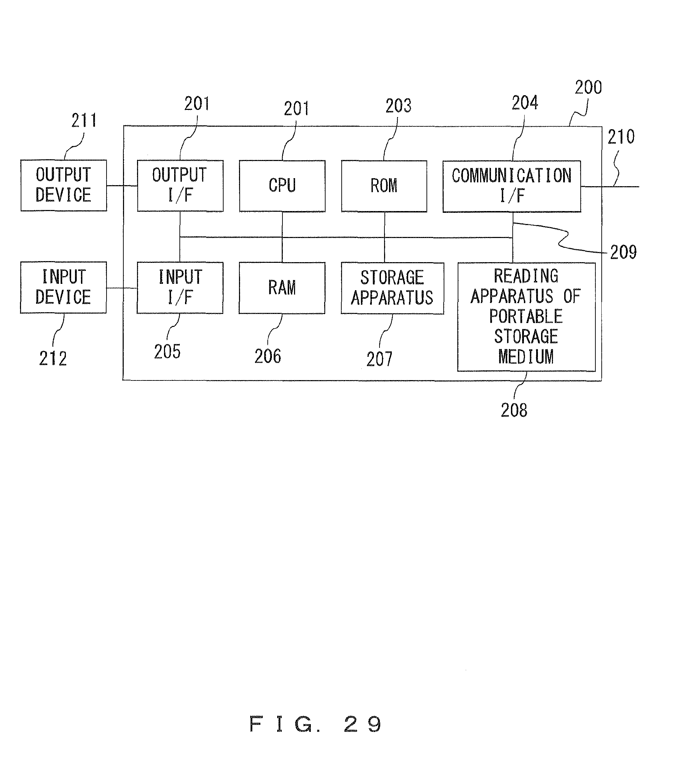

FIG. 29 is a configuration block diagram of the hardware environment of a computer according to an example of the present embodiment. A computer 200 functions as the UI design support apparatus 51 by reading in a program to perform the processes of the present embodiment.

The computer 200 includes an output I/F 201, a CPU 202, a ROM 203, a communication I/F 204, an input I/F 205, a RAM 206, a storage apparatus 207, a reading apparatus 208, a bus 209. The computer is connected to an output device 211, an input device 212.

Here, the CPU represents a central processing unit. The ROM represents a read only memory. The RAM represents a random access memory. The I/F represents an interface. To the bus 209, the output I/F 201, the CPU 202, the ROM 203, the communication I/F 204, the input I/F 205, the RAM 206, the storage apparatus 207, the reading apparatus 208 are connected. The reading apparatus 208 is an apparatus that reads out a portable recording medium. The output device 211 is connected to an output I/F 201. The input device 212 is connected to the input I/F 205.

As the storage apparatus 207, a storage apparatus in various forms such as a hard disk drive, a flash memory apparatus, a magnetic disk apparatus and the like may be used. The storage apparatus 207 or the ROM 203 stores, for example, a program to realize the processes explained in the present embodiment is stored. Meanwhile, the storage apparatus 207 or the ROM 203 stores the screen data 67, parts data 68, operation definition data, operation definition format 61, specification data 62, source code 63, screen transition specification data 64, screen parts specification data 65, parts attribute specification data 66 and the like.

The CPU 202 reads out a program to realize the processes explained in the present embodiment stored in the storage apparatus 207 or the ROM 203, and executes the program. Specifically, the CPU 202 functions as the screen design unit 53, the option adjusting unit 54, the simulation processing unit 56, the UI specification creation unit 57, the source code creation unit 58, the output control unit 59, by executing the program.

The program to realize the processes explained in the present embodiment may be stored in the storage apparatus 207 for example through a communication network 210 and the communication I/F 204 from the program provider side. In addition, the program to realize the processes explained in the present embodiment may also be stored in a commercially sold and distributed portable storage medium. In this case, the portable storage medium may be set in the reading apparatus 208 and the CPU 202 may read out and execute the program. As the portable storage medium, a storage medium in various forms such as a CD-ROM, a flexible disk, an optical disk, a magnet optic disk, an IC card, a USB memory apparatus and the like may be used. A program stored in such a storage medium is read out by the reading apparatus 208.

Meanwhile, for the input device 212, a keyboard, a mouse, a digital camera, a Web camera, a microphone, a scanner, a sensor, a tablet, a touch panel and the like may be used. In addition, for the output device 211, a display, a printer, a speaker and the like may be used. In addition, the network 210 may be a communication network such as the Internet, LAN (Local Area Network), WAN (Wide Area Network), a dedicated line, a wired or wireless network and the like.

According to the present embodiment, in the screen transition specification, the screen change of the UI app and the branch operation according to the option may be separated, and a screen transition specification in which the original screen change of the UI app is made easier to understand may be output. Meanwhile, for the specification of the branch operation according to the option, options set for the parts are displayed in a selectable manner before the simulation execution. Accordingly, according to the execution condition, any of the options may be selected and the specification may be checked by executing a simulation. As a result, a screen transition specification that is easy to check visually may be created, and the option specification may also be secured.

According to an aspect of the present embodiment, in the screen transition specification, the screen transition according to the original change of the screen and the operation information may be separated, to output the screen transition specification according to the original change of the screen and also to secure the specification of the branch operation according to the option.

Meanwhile, the present invention is not limited to the embodiment described above, and may take various configurations or embodiments without departing from the gist of the present invention.

## Claims

1. A display control program for causing a computer (200) to execute a process comprising:
obtaining screen information representing a screen, element attribute information associated with the screen information and representing an attribute of an element included in the screen, operation condition information regarding a condition for the element included in the screen to operate, and operation detail information regarding a detail of a process of the element to operate (S2);
outputting the screen information associated with the element attribute information as information representing a screen of screen transition information representing a transition relationship between the screens created from the operation condition and the operation detail information (S5); and
making a display unit display the element attribute information associated with the screen information corresponding to the screen of a simulation execution target in a selectable manner, in setting a simulation execution condition (S3).

2. The display control program according to claim 1, the process further comprising:
outputting the screen transition information, the element information associated with the screen information, element attribute information of the element or a source code (S18, S19).

3. A display control apparatus (1) comprising:
an obtaining unit (2) configured to obtain screen information representing a screen, element attribute information associated with the screen information and representing an attribute of an element included in the screen, operation condition information regarding a condition for the element included in the screen to operate, and operation detail information regarding a detail of a process of the element to operate;
a first output control unit (3) configured to output the screen information associated with the element attribute information as information representing a screen of screen transition information representing a transition relationship between the screens created from the operation condition and the operation detail information; and
a second output control unit (4) configured to make a display unit display the element attribute information associated with the screen information corresponding to the screen of a simulation execution target in a selectable manner, in setting a simulation execution condition.

4. The display control apparatus (1) according to claim 3, the display control apparatus further comprising:
an output unit (5) configured to output the screen transition information, the element information associated with the screen information, element attribute information of the element or a source code.

5. A method for controlling display, the method comprising:
obtaining by a computer (200) screen information representing a screen, element attribute information associated with the screen information and representing an attribute of an element included in the screen, operation condition information regarding a condition for the element included in the screentooperate, and operation detail information regarding a detail of a process of the element to operate (S2);
outputting by the computer (200) the screen information associated with the element attribute information as information representing a screen of screen transition information representing a transition relationship between the screens created from the operation condition and the operation detail information (S5); and
making by the computer (200) a display unit display the element attribute information associated with the screen information corresponding to the screen of a simulation execution target in a selectable manner, in setting a simulation execution condition (S3).

6. The method according to claim 5, the method further comprising:
outputting by a computer (200) the screen transition information, the element information associated with the screen information, element attribute information of the element or a source code (S18, S19).
